(19) **Europäisches Patentamt**
**European Patent Office**
**Office européen des brevets**

(11)  **EP 2 852 484 B1**

(12)  **EUROPEAN PATENT SPECIFICATION**

(45) Date of publication and mention
of the grant of the patent:
**06.09.2017  Bulletin 2017/36**

(51) Int Cl.:
**B29C 45/37** *(2006.01)*  **B29C 45/27** *(2006.01)*

(21) Application number: **12805488.9**

(22) Date of filing: **20.11.2012**

(86) International application number:
**PCT/US2012/066095**

(87) International publication number:
**WO 2013/176701 (28.11.2013 Gazette 2013/48)**

(54) **METHOD FOR OPERATING A HIGH PRODUCTIVITY INJECTION MOLDING MACHINE**

VERFAHREN ZUM BETREIBEN EINER SPRITZGIESSMASCHINE MIT HOHER PRODUKTIVITÄT

PROCÉDÉ D'EXPLOITATION D'UNE MACHINE DE MOULAGE PAR INJECTION À FORTE
PRODUCTIVITÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **21.05.2012  US 201213476045
21.05.2012  US 201213476178
21.05.2012  US 201213476584**

(43) Date of publication of application:
**01.04.2015  Bulletin 2015/14**

(73) Proprietor: **iMFLUX, Inc.
Wilmington, DE 19801 (US)**

(72) Inventors:
• **ALTONEN, Gene, Michael
West Chester, Ohio 45069 (US)**
• **NEUFARTH, Ralph, Edwin
West Chester, Ohio 45069 (US)**

• **LUMPKIN, Danny, David
West Chester, Ohio 45069 (US)**
• **BREIDENBACH, Vincent, Sean
West Chester, Ohio 45069 (US)**
• **MCCONNELL, Kimberly, Nichole
West Chester, Ohio 45069 (US)**
• **DODD, Michael, Thomas
West Chester, Ohio 45069 (US)**

(74) Representative: **Hoyng Rokh Monegier LLP
Rembrandt Tower, 31st Floor
Amstelplein 1
1096 HA Amsterdam (NL)**

(56) References cited:
**GB-A- 2 164 895      JP-A- H11 262 936
JP-A- S60 127 125     JP-A- 2005 215 497
JP-A- 2009 096 105    US-A- 4 219 322
US-A- 5 853 630       US-A1- 2009 273 731
US-B1- 6 372 162**

**Description**

TECHNICAL FIELD

The present invention relates to methods for operating injection molding machines and, more particularly, to methods for operating high productivity injection molding machines with molds made from high thermal conductivity materials.

BACKGROUND

Injection molding is a technology commonly used for high-volume manufacturing of parts made of meltable material, most commonly of parts made of thermoplastic polymers. During a repetitive injection molding process, a plastic resin, most often in the form of small beads or pellets, is introduced to an injection molding machine that melts the resin beads under heat, pressure, and shear. The now molten resin is forcefully injected into a mold cavity having a particular cavity shape. The injected plastic is held under pressure in the mold cavity, cooled, and then removed as a solidified part having a shape that essentially duplicates the cavity shape of the mold. The mold itself may have a single cavity or multiple cavities. Each cavity may be connected to a flow channel by a gate, which directs the flow of the molten resin into the cavity. A molded part may have one or more gates. It is common for large parts to have two, three, or more gates to reduce the flow distance the polymer must travel to fill the molded part. The one or multiple gates per cavity may be located anywhere on the part geometry, and possess any cross-section shape such as being essentially circular or be shaped with an aspect ratio of 1.1 or greater. Thus, a typical injection molding procedure comprises four basic operations: (1) heating the plastic in the injection molding machine to allow it to flow under pressure; (2) injecting the melted plastic into a mold cavity or cavities defined between two mold halves that have been closed; (3) allowing the plastic to cool and harden in the cavity or cavities while under pressure; and (4) opening the mold halves to cause the part to be ejected from the mold.

During the injection molding process, the molten plastic resin is injected into the mold cavity and the plastic resin is forcibly injected into the cavity by the injection molding machine until the plastic resin reaches the location in the cavity furthest from the gate. Thereafter, the plastic resin fills the cavity from the end back towards the gate. The resulting length and wall thickness of the part is a result of the shape of the mold cavity.

In some cases, it may be desirous to reduce the wall thickness of injected molded parts to reduce the plastic content, and thus cost, of the final part. Reducing wall thickness using a conventional high variable pressure injection molding process can be an expensive and a non-trivial task. In fact, conventional high variable pressure injection molding machines (e.g. machines injecting molten plastic resin between about 8,000 psi and about 20,000 psi) have a practical limit as to how thin walls of a part may be molded. Generally speaking, conventional high variable pressure injection molding machines cannot mold parts having a thinwall ratio (as defined by an L/T ratio set forth below) of greater than about 200. Furthermore, molding thinwall parts with thinwall ratios of more than 100 requires pressures at the high end of current capability and thus, presses that are capable of handling these high pressures.

When filling a thinwall part, the current industry practice is to fill the mold cavity at the highest possible rate the molding machine can achieve. This approach ensures that the mold cavity is filled before the polymer "freezes off" in the mold, and provides the lowest possible cycle time since the polymer is exposed to the cooled mold cavity as quickly as possible. This approach has two drawbacks. The first is that to achieve very high filling velocities requires very high power loads, and this requires very expensive molding equipment. Further, most electric presses are unable to provide sufficient power to achieve these high filling rates, or require very complicated and expensive drive systems that substantially increase the cost of the molding equipment making them impractical economically.

The second drawback is that the high filling rates result in very high pressures. These high pressures result in the need for very high clamping forces to hold the mold closed during filling, and these high clamping forces result in very expensive molding equipment. The high pressures also require very high strength injection molds, typically made from hardened tool steels. These high strength molds are also very expensive, and can be impractical economically for many molded components. Even with these substantial drawbacks, the need for thinwall injection molded components remains high, since these components use less polymer material to construct the molded part resulting in savings that more than offset the higher equipment costs. Further, some molded components require very thin design elements to perform properly, such as design elements that need to flex, or design elements that must mate with very small features.

As a liquid plastic resin is introduced into an injection mold in a conventional high variable pressure injection molding process the material adjacent to the walls of the cavity, immediately begins to "freeze," or solidify, or cure, and in the case or crystalline polymers the plastic resin begins to crystallize, because the liquid plastic resin cools to a temperature below the material's no flow temperature and portions of the liquid plastic become stationary. This frozen material adjacent to the walls of the mold narrows the flow path the thermoplastic travels as it progresses to the end of the mold cavity. The thickness of the frozen material layer adjacent to the walls of the mold increases as the filling of the mold cavity progresses, this causes a progressive reduction in the cross sectional area the polymer must flow through to continue to fill the mold cavity. As material freezes, it also shrinks, pulling away from the mold cavity walls, which reduces effective cooling of the material by the mold cavity walls. As a result, conventional high variable pressure injection molding machines fill the mold cavity with plastic very quickly and then maintain a packing pressure to force the material outward against the sides of the mold cavity to enhance cooling and to maintain the correct shape of the molded part. Conventional high variable pressure injection molding machines typically have cycle times made up of about 10% injection time, about 50% packing time, and about 40% cooling time.

As plastic freezes in the mold cavity, conventional high variable pressure injection molding machines increase injection pressure (to maintain a substantially constant volumetric flow rate due to the smaller cross-sectional flow area). Increasing the pressure, however, has both cost and performance downsides. As the pressure required to mold the component increases, the molding equipment must be strong enough to withstand the additional pressure, which generally equates to being more expensive. A manufacturer may have to purchase new equipment to accommodate these increased pressures. Thus, a decrease in the wall thickness of a given part can result in significant capital expenses to accomplish the manufacturing via conventional injection molding techniques.

In an effort to avoid some of the drawbacks mentioned above, many conventional injection molding operations use shear-thinning plastic material to improve flow characteristics of the plastic material into the mold cavity. As the shear-thinning plastic material is injected into the mold cavity, shear forces generated between the plastic material and the mold cavity walls tend to reduce viscosity of the plastic material, thereby allowing the plastic material to flow more freely and easily into the mold cavity. As a result, it is possible to fill thinwall parts fast enough to avoid the material completely freezing off before the mold is completely filled.

Reduction in viscosity is directly related to the magnitude of shear forces generated between the plastic material and the feed system, and between the plastic material and the mold cavity wall. Thus, manufacturers of these shear-thinning materials and operators of injection molding systems have been driving injection molding pressures higher in an effort to increase shear, thus reducing viscosity. Typically, high output injection molding systems (e.g., class 101 and 30 systems) inject the plastic material in to the mold cavity at melt pressures of typically 15,000 psi or more. Manufacturers of shear-thinning plastic material teach injection molding operators to inject the plastic material into the mold cavities above a minimum melt pressure. For example, polypropylene resin is typically processed at pressures greater than 6,000 psi (the recommended range from the polypropylene resin manufacturers, is typically from greater than 6,000 psi to about 15,000 psi). Press manufacturers and processing engineers typically recommend processing shear thinning polymers at the top end of the range, or significantly higher, to achieve maximum potential shear thinning, which is typically greater than 15,000 psi, to extract maximum thinning and better flow properties from the plastic material. Shear thinning thermoplastic polymers generally are processed in the range of over 6,000 psi to about 30,000 psi. Even with the use of shear thinning plastics, a practical limit exists for high variable pressure injection molding of thin walled parts. This limit is currently in the range of thinwall parts having a thinwall ratio of 200 or more. Moreover, even parts having a thinwall ratio of between 100 and 200 may become cost prohibitive as these parts generally require injection pressures between about 15,000 psi and about 20,000 psi.

High production injection molding machines (i.e., class 101 and class 30 molding machines) that produce thinwalled consumer products exclusively use molds having a majority of the mold made from high hardness materials. High production injection molding machines typically produce 500,000 cycles per year or more. Industrial quality production molds must be designed to withstand at least 500,000 cycles per year, preferably more than 1,000,000 cycles per year, more preferably more than 5,000,000 cycles per year, and even more preferably more than 10,000,000 cycles per year. These machines have multi cavity molds and complex cooling systems to increase production rates. The high hardness materials are more capable of withstanding the repeated high pressure clamping operations than lower hardness materials. However, high hardness materials, such as most tool steels, have relatively low thermal conductivities, generally less than 20 BTU/HR FT °F(34,62 W/m.K), which leads to long cooling times as heat is transferred through from the molten plastic material through the high hardness material.

Even with the ever increasing injection pressure ranges of existing high variable pressure injection molding machines, a practical limit remains of about 200 (L/T ratio) for molding thinwalled parts in conventional high (e.g., 20,000 psi) variable pressure injection molding machines and thinwall parts having a thinwall ratio of between about 100 and about 200 may be cost prohibitive for many manufacturers.

US5,853,630 discloses a method for operating an injection molding machine in accordance with the preamble of claim 1.

BRIEF DESCRIPTION OF THE DRAWINGS

The embodiments set forth in the drawings are illustrative and exemplary in nature and not intended to limit the subject matter defined by the claims. The following detailed description of the illustrative embodiments can be understood when read in conjunction with the following drawings, where like structure is indicated with like reference numerals and in which:

FIG. 1 illustrates a schematic view of a high productivity injection molding machine;

FIG. 2 illustrates a thin-walled part formed in the high productivity injection molding machine of FIG. 1;

FIG. 3 is a cavity pressure vs. time graph for the high productivity injection molding machine of FIG. 1 superimposed over a cavity pressure vs. time graph for a conventional high variable pressure injection molding machine;

FIG. 4 is a cavity pressure vs. time graph for the high productivity injection molding machine of FIG. 1 in accordance with the current invention superimposed over a cavity pressure vs. time graph for a conventional high variable pressure injection molding machine, the graphs illustrating the percentage of fill time devoted to certain fill steps;

FIGS. 5A-5D are side cross-sectional views of a portion of a thinwall mold cavity in various stages of fill by a conventional high variable pressure injection molding machine;

FIGS. 6A-6D are side cross-sectional views of a portion of a thinwall mold cavity in various stages of fill by the high productivity injection molding machine of FIG. 1;

FIG. 7 is a schematic illustration of an injection molding cycle that may be carried out on a high productivity injection molding machine;

FIG. 8 is a cross-sectional view of a mold assembly of the injection molding machine of FIG. 1;

FIG. 9 is a transparent perspective view of an alternate mold assembly;

FIG. 10 is a transparent perspective view of another mold assembly;

FIG. 11 is a perspective view of an alternate stack plate;

FIG. 12 is a perspective view of another alternate stack plate;

FIG. 13 is a cross-sectional view of yet another alternate mold assembly;

FIG. 14 is a cross-sectional view of yet another alternate mold assembly;

FIG. 15 is a peak power and peak flow rate vs. cavity fill percentage graph; and

FIG. 16 is a chart of peak power flow factor vs. L/T of a mold cavity.

DETAILED DESCRIPTION

Embodiments of the present invention generally relate to systems, machines, products, and methods of producing products by injection molding and more specifically to methods of producing products by substantially constant pressure injection molding.

The term "low pressure" as used herein with respect to melt pressure of a thermoplastic material, means melt pressures in a vicinity of a nozzle of an injection molding machine of 6000 psi and lower.

The term "substantially constant pressure" as used herein with respect to a melt pressure of a thermoplastic material, means that deviations from a baseline melt pressure do not produce meaningful changes in physical properties of the thermoplastic material. For example, "substantially constant pressure' includes, but is not limited to, pressure variations for which viscosity of the melted thermoplastic material do not meaningfully change. The term "substantially constant" in this respect includes deviations of approximately 30% from a baseline melt pressure. For example, the term "a substantially constant pressure of approximately 4600 psi" includes pressure fluctuations within the range of about 6000 psi (30% above 4600 psi) to about 3200 psi (30% below 4600 psi). A melt pressure is considered substantially constant as long as the melt pressure fluctuates no more than 30% from the recited pressure.

The term "melt holder", as used herein, refers to the portion of an injection molding machine that contains molten plastic in fluid communication with the machine nozzle. The melt holder is heated, such that a polymer may be prepared and held at a desired temperature. The melt holder is connected to a power source, for example a hydraulic cylinder or electric servo motor, that is in communication with a central control unit, and can be controlled to advance a diaphragm to force molten plastic through the machine nozzle. The molten material then flows through the runner system in to the mold cavity. The melt holder may by cylindrical in cross section, or have alternative cross sections that will permit a diaphragm to force polymer under pressures that can range from as low as 100 psi to pressures 40,000 psi or higher through the machine nozzle. The diaphragm may optionally be integrally connected to a reciprocating screw with flights designed to plasticize polymer material prior to injection.

The term "high L/T ratio" generally refers to L/T ratios of 100 or greater, and more specifically to L/T ratios of 200 or greater, but less than 1000. Calculation of the L/T ratio is defined below.

The term "peak flow rate" generally refers to the maximum volumetric flow rate, as measured at the machine nozzle.

The term "peak injection rate" generally refers to the maximum linear speed the injection ram travels in the process of forcing polymer in to the feed system. The ram can be a reciprocating screw such as in the case of a single stage injection system, or a hydraulic ram such as in the case of a two stage injection system.

The term "ram rate" generally refers to the linear speed the injection ram travels in the process of forcing polymer in to the feed system.

The term "flow rate" generally refers to the volumetric flow rate of polymer as measured at the machine nozzle. This flow rate can be calculated based on the ram rate and ram cross sectional area, or measured with a suitable sensor located in the machine nozzle.

The term "cavity percent fill" generally refers to the percentage of the cavity that is filled on a volumetric basis. For example, if a cavity is 95% filled, then the total volume of the mold cavity that is filled is 95% of the total volumetric capacity of the mold cavity.

The term "melt temperature" generally refers to the temperature of the polymer that is maintained in the melt holder, and in the material feed system when a hot runner system is used, which keeps the polymer in a molten state. The melt temperature varies by material, however, a desired melt temperature is generally understood to fall within the ranges recommended by the material manufacturer.

The term "gate size" generally refers to the cross sectional area of a gate, which is formed by the intersection of the runner and the mold cavity. For hot runner systems, the gate can be of an open design where there is no positive shut off of the flow of material at the gate, or a closed design where a valve pin is used to mechanically shut off the flow of material through the gate in to the mold cavity (commonly referred to as a valve gate). The gate size refers to the cross sectional area, for example a 1mm gate diameter refers to a cross sectional area of the gate is 1mm at the point the gate meets the mold cavity. The cross section of the gate may be of any desired shape.

The term "effective gate area" generally refers to a cross sectional area of a gate corresponding to an intersection of the mold cavity and a material flow channel of a feed system (e.g., a runner) feeding thermoplastic to the mold cavity. The gate could be heated or not heated. The gate could be round, or any cross sectional shape, suited to achieve the desired thermoplastic flow into the mold cavity..

The term "intensification ratio" generally refers to the mechanical advantage the injection power source has on the injection ram forcing the molten polymer through the machine nozzle. For hydraulic power sources, it is common that the hydraulic piston will have a 10:1 mechanical advantage over the injection ram. However, the mechanical advantage can range from ratios much lower, such as 2:1, to much higher mechanical advantage ratio such as 50:1.

The term "peak power" generally refers to the maximum power generated when filling a mold cavity. The peak power may occur at any point in the filling cycle. The peak power is determined by the product of the plastic pressure as measured at the machine nozzle multiplied by the flow rate as measured at the machine nozzle. Power is calculated by the formula $P = p * Q$ where p is pressure and Q is volumetric flow rate.

The term "volumetric flow rate" generally refers to the flow rate as measured at the machine nozzle. This flow rate can be calculated based on the ram rate and ram cross sectional area, or measured with a suitable sensor located in the machine nozzle.

The terms "filled" and "full," when used with respect to a mold cavity including thermoplastic material, are interchangeable and both terms mean that thermoplastic material has stopped flowing into the mold cavity.

The term "shot size" generally refers to the volume of polymer to be injected from the melt holder to completely fill the mold cavity or cavities. The Shot Size volume is determined based on the temperature and pressure of the polymer in the melt holder just prior to injection. In other words, the shot size is a total volume of molten plastic material that is injected in a stroke of an injection molding ram at a given temperature and pressure. Shot size may include injecting molten plastic material into one or more injection cavities through one or more gates. The shot of molten plastic material may also be prepared and injected by one or more melt holders.

The term "hesitation" generally refers to the point at which the velocity of the flow front is minimized sufficiently to allow a portion of the polymer to drop below its no flow temperature and begin to freeze off.

The term "electric motor" or "electric press," when used herein includes both electric servo motors and electric linear motors.

The term "Peak Power Flow Factor" refers to a normalized measure of peak power required by an injection molding system during a single injection molding cycle and the Peak Power Flow Factor may be used to directly compare power requirements of different injection molding systems. The Peak Power Flow Factor is calculated by first determining the Peak Power, which corresponds to the maximum product of molding pressure multiplied by flow rate during the filling cycle (as defined herein), and then determining the Shot Size for the mold cavities to be filled. The Peak Power Flow Factor is then calculated by dividing the Peak Power by the Shot Size.

The tem "cavity percent fill" is defined as the % of the cavity that is filled on a volumetric basis. Thus, if a cavity is 95% filled, then the total volume of the mold cavity that is filled is 95% of the total volumetric capacity of the mold cavity.

The term "high productivity injection molding machine" is defined as a class 101 or a class 30 injection molding machine. Alternatively, the term "high productivity injection molding machine" may be defined as an injection molding machine that is capable of performing more than 1 million cycles, preferably more than 1.25 million cycles, more preferably more than 2 million cycles, more preferably more than 5 million cycles, and even more preferably more than 10 million cycles before the mold core (which is made up of first and second mold parts that define a mold cavity therebetween) reaches the end of its useful life. Characteristics of "high productivity injection molding machines" include mold cavities having an L/T ratio of greater than 100 (and preferably greater than 200), multiple mold cavities (preferably 4 mold cavities, more preferably 16 mold cavities, more preferably 32 mold cavities, more preferably 64 mold cavities, more preferably 128 mold cavities and more preferably 256 mold cavities, or any number of mold cavities between 4 and 512), a heated runner, and a guided ejection mechanism.

The term "useful life" is defined as the expected life of a mold part before failure or scheduled replacement. When used in conjunction with a mold part or a mold core (or any part of the mold that defines the mold cavity), the term "useful life" means the time a mold part or mold core is expected to be in service before quality problems develop in the molded part, before problems develop with the integrity of the mold part (e.g., galling, deformation of parting line, deformation or excessive wear of shut-off surfaces), or before mechanical failure (e.g., fatigue failure or fatigue cracks) occurs in the mold part. Typically, the mold part has reached the end of its "useful life" when the contact surfaces that define the mold cavity must be discarded or replaced. The mold parts may require repair or refurbishment from time to time over the "useful life" of a mold part and this repair or refurbishment does not require the complete replacement of the mold part to achieve acceptable molded part quality and molding efficiency. Furthermore, it is possible for damage to occur to a mold part that is unrelated to the normal operation of the mold part, such as a part not being properly removed from the mold and the mold being force ably closed on the non-ejected part, or an operator using the wrong tool to remove a molded part and damaging a mold component. For this reason, spare mold parts are sometimes used to replace these damaged components prior to them reaching the end of their useful life. Replacing mold parts because of damage does not change the expected useful life.

The term "guided ejection mechanism" is defined as a dynamic part that actuates to physically eject a molded part from the mold cavity.

The term "coating" is defined as a layer of material less than 0.13 mm (0.005 in) in thickness, that is disposed on a surface of a mold part defining the mold cavity, that has a primary function other than defining a shape of the mold cavity (e.g., a function of protecting the material defining the mold cavity, a function of reducing friction between a molded part and a mold cavity wall to enhance removal of the molded part from the mold cavity.

The term "average thermal conductivity" is defined as the thermal conductivity of any materials that make up the mold cavity or the mold side or mold part. Materials that make up coatings, stack plates, support plates, and gates or runners, whether integral with the mold cavity or separate from the mold cavity, are not included in the average thermal conductivity. Average thermal conductivity is calculated on a volume weighted basis.

The term "effective cooling surface" is defined as a surface through which heat is removed from a mold part. One example of an effective cooling surface is a surface that defines a channel for cooling fluid from an active cooling system. Another example of an effective cooling surface is an outer surface of a mold part through which heat dissipates to the atmosphere. A mold part may have more than one effective cooling surface and thus may have a unique average thermal conductivity between the mold cavity surface and each effective cooling surface.

The term "nominal wall thickness" is defined as the theoretical thickness of a mold cavity if the mold cavity were made to have a uniform thickness. The nominal wall thickness may be approximated by the average wall thickness. The nominal wall thickness may be calculated by integrating length and width of the mold cavity that is filled by an individual gate.

The term "average hardness" is defined as the Rockwell hardness for any material or combination of materials in a desired volume. When more than one material is present, the average hardness is based on a volume weighted percentage of each material. Average hardness calculations include hardnesses for materials that make up any portion of the mold cavity. Average hardness calculations do not include materials that make up coatings, stack plates, gates or runners, whether integral with a mold cavity or not, and support plates. Generally, average hardness refers to the volume weighted hardness of material in the mold cooling region.

The term "mold cooling region" is defined as a volume of material that lies between the mold cavity surface and an effective cooling surface.

The term "cycle time" is defined as a single iteration of an injection molding process that is required to fully form an injection molded part. Cycle time includes the steps of advancing molten thermoplastic material into a mold cavity, substantially filling the mold cavity with thermoplastic material, cooling the thermoplastic material, separating first and second mold sides to expose the cooled thermoplastic material, removing the thermoplastic material, and closing the first and second mold sides.

High productivity injection molding machines (e.g., a class 101 or a class 30 injection molding machine, or an "ultra high productivity molding machine"), may be used to produce thinwalled consumer products, such as toothbrush handles and razor handles. Thin walled parts are generally defined as having a high L/T ratio of 100 or more.

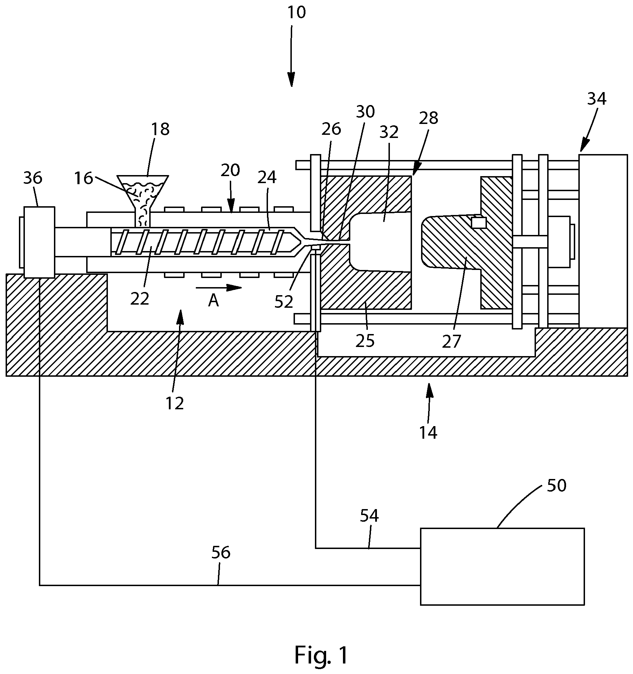

Referring to the figures in detail, FIG. 1 illustrates an exemplary high productivity injection molding apparatus 10 that generally includes an injection system 12 and a clamping system 14. A thermoplastic material may be introduced to the injection system 12 in the form of thermoplastic pellets 16. The thermoplastic pellets 16 may be placed into a hopper 18, which feeds the thermoplastic pellets 16 into a heated barrel 20 of the injection system 12. The thermoplastic pellets 16, after being fed into the heated barrel 20, may be driven to the end of the heated barrel 20 by a reciprocating screw 22. The heating of the heated barrel 20 and the compression of the thermoplastic pellets 16 by the reciprocating screw 22 causes the thermoplastic pellets 16 to melt, forming a molten thermoplastic material 24. The molten thermoplastic material is typically processed at a temperature of about 130°C to about 410°C.

The reciprocating screw 22 forces the molten thermoplastic material 24, toward a nozzle 26 to form a shot of thermoplastic material, which will be injected into a mold cavity 32 of a mold 28 via one or more gates (preferably three or less gates) 30, which direct the flow of the molten thermoplastic material 24 to the mold cavity 32. In other embodiments the nozzle 26 may be separated from one or more gates 30 by a feed system (not shown). The mold cavity 32 is formed between first and second mold sides 25, 27 of the mold 28 and the first and second mold sides 25, 27 are held together under pressure by a press or clamping unit 34. The press or clamping unit 34 applies a clamping force during the molding process that is greater than the force exerted by the injection pressure acting to separate the two mold halves 25, 27, thereby holding the first and second mold sides 25, 27 together while the molten thermoplastic material 24 is injected into the mold cavity 32. To support these clamping forces, the clamping system 14 may include a mold frame and a mold base.

Once the shot of molten thermoplastic material 24 is injected into the mold cavity 32, the reciprocating screw 22 stops traveling forward. The molten thermoplastic material 24 takes the form of the mold cavity 32 and the molten thermoplastic material 24 cools inside the mold 28 until the thermoplastic material 24 solidifies. Once the thermoplastic material 24 has solidified, the press 34 releases the first and second mold sides 25, 27, the first and second mold sides 25, 27 are separated from one another, and the finished part may be ejected from the mold 28. The mold 28 may include a plurality of mold cavities 32 to increase overall production rates. The shapes of the cavities of the plurality of mold cavities may be identical, similar or different from each other. (The latter may be considered a family of mold cavities).

A controller 50 is communicatively connected with a sensor 52, located in the vicinity of the nozzle 26, and a screw control 36. The controller 50 may include a microprocessor, a memory, and one or more communication links. The controller 50 may also be optionally connected to a sensor 53 located proximate an end of the mold cavity 32. This sensor 32 may provide an indication of when the thermoplastic material is approaching the end of fill in the mold cavity 32. The sensor 32 may sense the presence of thermoplastic material by optically, pneumatically, mechanically or otherwise sensing pressure and/or temperature of the thermoplastic material. When pressure or temperature of the thermoplastic material is measured by the sensor 52, this sensor 52 may send a signal indicative of the pressure or the temperature to the controller 50 to provide a target pressure for the controller 50 to maintain in the mold cavity 32 (or in the nozzle 26) as the fill is completed. This signal may generally be used to control the molding process, such that variations in material viscosity, mold temperatures, melt temperatures, and other variations influencing filling rate, are adjusted by the controller 50. These adjustments may be made immediately during the molding cycle, or corrections can be made in subsequent cycles. Furthermore, several signals may be averaged over a number of cycles and then used to make adjustments to the molding process by the controller 50. The controller 50 may be connected to the sensor 52, and/or the sensor 53, and the screw control 36 via wired connections 54, 56, respectively. In other embodiments, the controller 50 may be connected to the sensors 52, 53 and screw control 56 via a wireless connection, a mechanical connection, a hydraulic connection, a pneumatic connection, or any other type of communication connection known to those having ordinary skill in the art that will allow the controller 50 to communicate with both the sensors 52, 53 and the screw control 36.

In the embodiment of FIG. 1, the sensor 52 is a pressure sensor that measures (directly or indirectly) melt pressure of the molten thermoplastic material 24 in vicinity of the nozzle 26. The sensor 52 generates an electrical signal that is transmitted to the controller 50. The controller 50 then commands the screw control 36 to advance the screw 22 at a rate that maintains a desired melt pressure of the molten thermoplastic material 24 in the nozzle 26. While the sensor 52 may directly measure the melt pressure, the sensor 52 may measure other characteristics of the molten thermoplastic material 24, such as temperature, viscosity, flow rate, etc, that are indicative of melt pressure. Likewise, the sensor 52 need not be located directly in the nozzle 26, but rather the sensor 52 may be located at any location within the injection system 12 or mold 28 that is fluidly connected with the nozzle 26. If the sensor 52 is not located within the nozzle 26, appropriate correction factors may be applied to the measured characteristic to calculate an estimate of the melt pressure in the nozzle 26. The sensor 52 need not be in direct contact with the injected fluid and may alternatively be in dynamic communication with the fluid and able to sense the pressure of the fluid and/or other fluid characteristics. If the sensor 52 is not located within the nozzle 26, appropriate correction factors may be applied to the measured characteristic to calculate the melt pressure in the nozzle 26. In yet other embodiments, the sensor 52 need not be disposed at a location which is fluidly connected with the nozzle. Rather, the sensor could measure clamping force generated by the clamping system 14 at a mold parting line between the first and second mold parts 25, 27. In one aspect the controller 50 may maintain the pressure according to the input from sensor 52. Alternatively, the sensor could measure an electrical power demand by an electric press, which may be used to calculate an estimate of the pressure in the nozzle.

Although an active, closed loop controller 50 is illustrated in Fig. 1, other pressure regulating devices may be used instead of the closed loop controller 50. For example, a pressure regulating valve (not shown) or a pressure relief valve (not shown) may replace the controller 50 to regulate the melt pressure of the molten thermoplastic material 24.

More specifically, the pressure regulating valve and pressure relief valve can prevent overpressurization of the mold 28. Another alternative mechanism for preventing overpressurization of the mold 28 is an alarm that is activated when an overpressurization condition is detected.

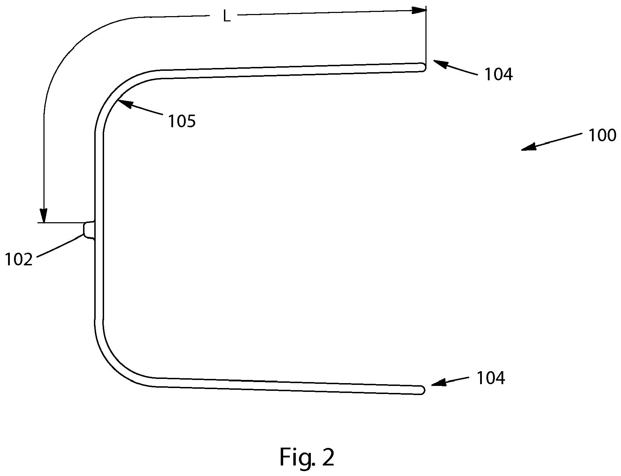

Turning now to Fig. 2a molded part 100 is illustrated. The molded part 100 is a thin-walled part. Molded parts are generally considered to be thin-walled when a length of a flow channel L divided by a thickness of the flow channel T is greater than 100 (i.e., L/T > 100), but less than 1000. For mold cavities having a more complicated geometry, the L/T ratio may be calculated by integrating the T dimension over the length of the mold cavity 32 from a gate 30 to the end of the mold cavity 32, and determining the longest length of flow from the gate 30 to the end of the mold cavity 32. The L/T ratio can then be determined by dividing the longest length of flow by the average part thickness. In the case where a mold cavity 32 has more than one gate 30, the L/T ratio is determined by integrating L and T for the portion of the mold cavity 32 filled by each individual gate and the overall L/T ratio for a given mold cavity is the highest L/T ratio that is calculated for any of the gates. In some injection molding industries, thin-walled parts may be defined as parts having an L/T > 100, or having an LIT > 200, but < 1000. The length of the flow channel L is the longest flow length as measured from the gate 30 to the end 104 of the mold cavity. Thin-walled parts are especially prevalent in the consumer products industry.

High L/T ratio parts are commonly found in molded parts having average thicknesses less than about 10 mm. In consumer products, products having high L/T ratios generally have an average thickness of less than about 5 mm. For example, while automotive bumper panels having a high L/T ratio generally have an average thickness of 10 mm or less, tall drinking glasses having a high L/T ratio generally have an average thickness of about 5 mm or less, containers (such as tubs or vials) having a high L/T ratio generally have an average thickness of about 3mm or less, bottle cap enclosures having a high L/T ratio generally have an average thickness of about 2mm or less, and individual toothbrush bristles having a high L/T ratio generally have an average thickness of about 1 mm or less. The high productivity injection molding processes disclosed herein are particularly advantageous for parts having a thickness of 5 mm or less and the disclosed processes and devices are more advantageous for thinner parts.

Thin-walled parts with high L/T ratios present certain obstacles in injection molding. For example, the thinness of the flow channel tends to cool the molten thermoplastic material before the material reaches the flow channel end 104. When this happens, the thermoplastic material freezes off and no longer flows, which results in an incomplete part. To overcome this problem, traditional injection molding machines inject the molten thermoplastic material at very high pressures, typically greater than 15,000 psi, so that the molten thermoplastic material rapidly fills the mold cavity before having a chance to cool and freeze off. This is one reason that manufacturers of the thermoplastic materials teach injecting at very high pressures. Another reason traditional injection molding machines inject at high pressures is the increased shear, which increases flow characteristics, as discussed above. These very high injection pressures require the use of very hard materials to form the mold 28 and the feed system, among other things. Moreover, the thin walled parts may include one or more special features 105, such as a living hinge, a filament, a closure, a dispenser, a spout, a bellows, and an actuator, that must be filled before the material freezes.

When filling at constant pressure, it was generally thought that the filling rates would need to be reduced relative to conventional filling methods. This means the polymer would be in contact with the cool molding surfaces for longer periods before the mold would completely fill. Thus, more heat would need to be removed before filling, and this would be expected to result in the material freezing off before the mold is filled. It has been unexpectedly discovered that the thermoplastic material will flow when subjected to substantially constant pressure conditions despite a portion of the mold cavity being below the no-flow temperature of the thermoplastic material. It would be generally expected by one of ordinary skill in the art that such conditions would cause the thermoplastic material to freeze and plug the mold cavity rather than continue to flow and fill the entire mold cavity. Without intending to be bound by theory, it is believed that the substantially constant pressure conditions of embodiments of the disclosed method and device allow for dynamic flow conditions (i.e., constantly moving melt front) throughout the entire mold cavity during filling. There is no hesitation in the flow of the molten thermoplastic material as it flows to fill the mold cavity and, thus, no opportunity for freeze-off of the flow despite at least a portion of the mold cavity being below the no-flow temperature of the thermoplastic material.

Additionally, it is believed that as a result of the dynamic flow conditions, the molten thermoplastic material is able to maintain a temperature higher than the no-flow temperature, despite being subjected to such temperatures in the mold cavity, as a result of shear heating. It is further believed that the dynamic flow conditions interfere with the formation of crystal structures in the thermoplastic material as it begins the freezing process. Crystal structure formation increases the viscosity of the thermoplastic material, which can prevent suitable flow to fill the cavity. The reduction in crystal structure formation and/or crystal structure size can allow for a decrease in the thermoplastic material viscosity as it flows into the cavity and is subjected to the low temperature of the mold that is below the no-flow temperature of the material.

The disclosed high productivity injection molding methods may use a sensor (such as the sensor 53 in Fig. 1 above) located near an end of flow position (i.e., near an end of the mold cavity) to monitor changes in material viscosity, changes in material temperature, and changes in other material properties. Measurements from this sensor may be communicated to the controller to allow the controller to correct the process in real time to ensure the melt front pressure is relieved prior to the melt front reaching the end of the mold cavity, which can cause flashing of the mold, and another pressure and power peak. Moreover, the controller may use the sensor measurements to adjust the peak power and peak flow rate points in the process, so as to achieve consistent processing conditions. In addition to using the sensor measurements to fine tune the process in real time during the current injection cycle, the controller may also to adjust the process over time (e.g., over a plurality of injection cycles). In this way, the current injection cycle can be corrected based on measurements occurring during one or more cycles at an earlier point in time. In one embodiment, sensor readings can be averaged over many cycles so as to achieve process consistency.

In various embodiments, the mold can include a cooling system that maintains the entire mold cavity at a temperature below the no-flow temperature. For example, even surfaces of the mold cavity which contact the shot comprising molten thermoplastic material can be cooled to maintain a lower temperature. Any suitable cooling temperature can be used. For example, the mold can be maintained substantially at room temperature. Incorporation of such cooling systems can advantageously enhance the rate at which the as-formed injection molded part is cooled and ready for ejection from the mold.

Thermoplastic Material:

A variety of thermoplastic materials can be used in the high productivity injection molding methods and devices of the disclosure. In one embodiment, the molten thermoplastic material has a viscosity, as defined by the melt flow index of about 0.1 g/10 min to about 500 g/10 min, as measured by ASTM D1238 performed at temperature of about 230C with a 2.16 kg weight. For example, for polypropylene the melt flow index can be in a range of about 0.5 g/10 min to about 200 g/10 min. Other suitable melt flow indexes include about 1 g/10 min to about 400 g/10 min, about 10 g/10 min to about 300 g/10 min, about 20 to about 200 g/10 min, about 30 g/10 min to about 100 g/10 min, about 50 g/10 min to about 75 g/10 min , about 0.1 g/10 min to about 1 g/10 min , or about 1 g/10 min to about 25 g/10 min. The MFI of the material is selected based on the application and use of the molded article. For examples, thermoplastic materials with an MFI of 0.1 g/10 min to about 5 g/10 min may be suitable for use as preforms for Injection Stretch Blow Molding (ISBM) applications. Thermoplastic materials with an MFI of 5 g/10 min to about 50 g/10 min may be suitable for use as caps and closures for packaging articles. Thermoplastic materials with an MFI of 50 g/10 min to about 150 g/10 min may be suitable for use in the manufacture of buckets or tubs. Thermoplastic materials with an MFI of 150 g/10min to about 500 g/10 min may be suitable for molded articles that have extremely high L/T ratios such as a thin plate. Manufacturers of such thermoplastic materials generally teach that the materials should be injection molded using melt pressures in excess of 6000 psi, and often in great excess of 6000 psi. Contrary to conventional teachings regarding injection molding of such thermoplastic materials, embodiments of the high productivity injection molding method and device of the disclosure advantageously allow for forming quality injection molded parts using such thermoplastic materials and processing at melt pressures below 6000 psi, and possibly well below 6000 psi.

The thermoplastic material can be, for example, a polyolefin. Exemplary polyolefins include, but are not limited to, polypropylene, polyethylene, polymethylpentene, and polybutene-1. Any of the aforementioned polyolefins could be sourced from bio-based feedstocks, such as sugarcane or other agricultural products, to produce a bio-polypropylene or bio-polyethylene. Polyolefins advantageously demonstrate shear thinning when in a molten state. Shear thinning is a reduction in viscosity when the fluid is placed under compressive stress. Shear thinning can beneficially allow for the flow of the thermoplastic material to be maintained throughout the injection molding process. Without intending to be bound by theory, it is believed that the shear thinning properties of a thermoplastic material, and in particular polyolefins, results in less variation of the materials viscosity when the material is processed at constant pressures. As a result, embodiments of the method of the disclosure can be less sensitive to variations in the thermoplastic material, for example, resulting from colorants and other additives as well as processing conditions. This decreased sensitivity to batch-to-batch variations of the properties thermoplastic material can also advantageously allow post-industrial and post consumer recycled plastics to be processed using embodiments of the method and the device of the disclosure. Post-industrial, post consumer recycled plastics are derived from end products that have completed their life cycle as a consumer item and would otherwise have been disposed of as a solid waste product. Such recycled plastic, and blends of thermoplastic materials, inherently have significant batch-to-batch variation of their material properties..

The thermoplastic material can also be, for example, a polyester. Exemplary polyesters include, but are not limited to, polyethylene terphthalate (PET). The PET polymer could be sourced from bio-based feedstocks, such as sugarcane or other agricultural products, to produce a partially or fully bio-PET polymer. Other suitable thermoplastic materials include copolymers of polypropylene and polyethylene, and polymers and copolymers of thermoplastic elastomers, polyester, polystyrene, polycarbonate, poly(acrylonitrile-butadiene-styrene), poly(lactic acid), bio-based polyesters such as poly(ethylene furanate) polyhydroxyalkanoate, poly(ethylene furanoate), (considered to be an alternative to, or drop-in replacement for, PET), polyhydroxyalkanoate, polyamides, polyacetals, ethylene-alpha olefin rubbers, and styrenebutadiene-styrene block copolymers. The thermoplastic material can also be a blend of multiple polymeric and non-polymeric materials. The thermoplastic material can be, for example, a blend of high, medium, and low molecular polymers yielding a multi-modal or bi-modal blend. The multi-modal material can be designed in a way that results in a thermoplastic material that has superior flow properties yet has satisfactory chemo/physical properties. The thermoplastic material can also be a blend of a polymer with one or more small molecule additives. The small molecule could be, for example, a siloxane or other lubricating molecule that, when added to the thermoplastic material, improves the flowability of the polymeric material.

Other additives may include inorganic fillers such calcium carbonate, calcium sulfate, talcs, clays (e.g., nanoclays), aluminum hydroxide, CaSiO3, glass formed into fibers or microspheres, crystalline silicas (e.g., quartz, novacite, crystallobite), magnesium hydroxide, mica, sodium sulfate, lithopone, magnesium carbonate, iron oxide; or, organic fillers such as rice husks, straw, hemp fiber, wood flour, or wood, bamboo or sugarcane fiber.

Other suitable thermoplastic materials include renewable polymers such as nonlimiting examples of polymers produced directly from organisms, such as polyhydroxyalkanoates (e.g., poly(beta-hydroxyalkanoate), poly(3-hydroxybutyrate-co-3-hydroxyvalerate, NODAX (Registered Trademark) ), and bacterial cellulose; polymers extracted from plants, agricultural and forest, and biomass, such as polysaccharides and derivatives thereof (e.g., gums, cellulose, cellulose esters, chitin, chitosan, starch, chemically modified starch, particles of cellulose acetate), proteins (e.g., zein, whey, gluten, collagen), lipids, lignins, and natural rubber; thermoplastic starch produced from starch or chemically starch and current polymers derived from naturally sourced monomers and derivatives, such as bio-polyethylene, bio-polypropylene, polytrimethylene terephthalate, polylactic acid, NYLON 11, alkyd resins, succinic acid-based polyesters, and bio-polyethylene terephthalate.

The suitable thermoplastic materials may include a blend or blends of different thermoplastic materials such in the examples cited above. As well the different materials may be a combination of materials derived from virgin bio-derived or petroleum-derived materials, or recycled materials of bio-derived or petroleum-derived materials. One or more of the thermoplastic materials in a blend may be biodegradable. And for non-blend thermoplastic materials that material may be biodegradable.

Exemplary thermoplastic resins together with their recommended operating pressure ranges are provided in the following table:

| Material | Full Name | Injection Pressure Range (PSI) | Company | Material Brand Name |
|---|---|---|---|---|
| pp | Polypropylene | 10000 - 15000 | RTP Imagineering Plastics | RTP 100 series Polypropylene |
| Nylon | | 10000 - 18000 | RTP Imagineering Plastics | RTP 200 series Nylon |
| ABS | Acrylonitrile Butadiene Styrene | 8000 - 20000 | Marplex | Astalac ABS |
| PET | Polyester | 5800 - 14500 | Asia International | AIE PET 401F |
| Acetal Copolymer | | 7000 - 17000 | API Kolon | Kocetal |
| PC | Polycarbonate | 10000 - 15000 | RTP Imagineering Plastics | RTP 300 series Polycarbonate |
| PS | Polystyrene | 10000 - 15000 | RTP Imagineering Plastics | RTP 400 series |
| SAN | Styrene Acrylonitrile | 10000 - 15000 | RTP Imagineering Plastics | RTP 500 series |
| PE | LDPE & HDPE | 10000 - 15000 | RTP Imagineering Plastics | RTP 700 Series |
| TPE | Thermoplastic Elastomer | 10000 - 15000 | RTP Imagineering Plastics | RTP 1500 series |
| PVDF | Polyvinylidene Fluoride | 10000 - 15000 | RTP Imagineering Plastics | RTP 3300 series |
| PTI | Polytrimethylene Terephthalate | 10000 - 15000 | RTP Imagineering Plastics | RTP 4700 series |

(continued)

| Material | Full Name | Injection Pressure Range (PSI) | Company | Material Brand Name |
|---|---|---|---|---|
| PBT | Polybutylene Terephthalate | 10000 - 15000 | RTP Imagineering Plastics | RTP 1000 series |
| PLA | Polylactic Acid | 8000 - 15000 | RTP Imagineering Plastics | RTP 2099 series |

While more than one of the embodiments involves filling substantially the entire mold cavity with the shot comprising the molten thermoplastic material while maintaining the melt pressure of the shot comprising the molten thermoplastic material at a substantially constant pressure, specific thermoplastic materials benefit from the invention at different constant pressures. Specifically: PP, nylon, PC, PS, SAN, PE, TPE, PVDF, PTI, PBT, and PLA at a substantially constant pressure of less than 10000 psi; ABS at a substantially constant pressure of less than 8000 psi; PET at a substantially constant pressure of less than 5800 psi; Acetal copolymer at a substantially constant pressure of less than 7000 psi; plus poly(ethylene furanate) polyhydroxyalkanoate, polyethylene furanoate (aka PEF) at substantially constant pressure of less than 10000 psi, or 8000 psi, or 7000 psi or 6000 psi, or 5800 psi.

As described in detail above, embodiments of the disclosed high productivity injection molding method can achieve one or more advantages over conventional high variable pressure injection molding processes. For example, embodiments include a more cost effective and efficient process that eliminates the need to balance the pre-injection pressures of the mold cavity and the thermoplastic materials, a process that allows for use of atmospheric mold cavity pressures and, thus, simplified mold structures that eliminate the necessity of pressurizing means, the ability to use lower hardness, high thermal conductivity mold cavity materials that are more cost effective and easier to machine, a more robust processing method that is less sensitive to variations in the temperature, viscosity, and other material properties of the thermoplastic material, and the ability to produce quality injection molded parts at substantially constant pressures without premature hardening of the thermoplastic material in the mold cavity and without the need to heat or maintain constant temperatures in the mold cavity.

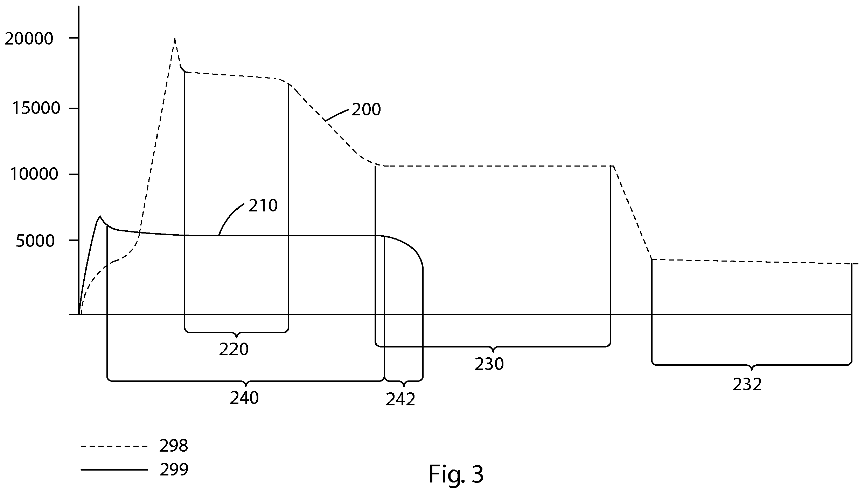

Turning now to Fig. 3, a typical pressure-time curve for a conventional high variable pressure injection molding process is illustrated by the dashed line 200. By contrast, a pressure-time curve for the disclosed high productivity injection molding machine is illustrated by the solid line 210.

In the conventional case, melt pressure is rapidly increased to well over 15,000 psi and then held at a relatively high pressure, more than 15,000 psi, for a first period of time 220. The first period of time 220 is the fill time in which molten plastic material flows into the mold cavity. Thereafter, the melt pressure is decreased and held at a lower, but still relatively high pressure, typically 10,000 psi or more, for a second period of time 230. The second period of time 230 is a packing time in which the melt pressure is maintained to ensure that all gaps in the mold cavity are back filled. After packing is complete, the pressure may optionally be dropped again for a third period of time 232, which is the cooling time. The mold cavity in a conventional high pressure injection molding system is packed from the end of the flow channel back to towards the gate. The material in the mold typically freezes off near the end of the cavity, then completely frozen off region of material progressively moves toward the gate location, or locations. As a result, the plastic near the end of the mold cavity is packed for a shorter time period and with reduced pressure, than the plastic material that is closer to the gate location, or locations. Part geometry, such as very thin cross sectional areas midway between the gate and end of mold cavity, can also influence the level of packing pressure in regions of the mold cavity. Inconsistent packing pressure may cause inconsistencies in the finished product, as discussed above. Moreover, the conventional packing of plastic in various stages of solidification results in some non-ideal material properties, for example, molded-in stresses, sink, and non-optimal optical properties. A high productivity injection molding system, on the other hand, injects the molten plastic material into the mold cavity at a substantially constant pressure for a fill time period 240. The injection pressure in the example of FIG. 3 is less than 6,000 psi. However, other embodiments may use higher pressures. After the mold cavity is filled, the high productivity injection molding system gradually reduces pressure over a second time period 242 as the molded part is cooled. By using a substantially constant pressure, the molten thermoplastic material maintains a continuous melt flow front that advances through the flow channel from the gate towards the end of the flow channel. In other words, the molten thermoplastic material remains moving throughout the mold cavity, which prevents premature freeze off. Thus, the plastic material remains relatively uniform at any point along the flow channel, which results in a more uniform and consistent finished product. By filling the mold with a relatively uniform pressure, the finished molded parts form crystalline structures that may have better mechanical and optical properties than conventionally molded parts. Moreover, the parts molded at constant pressures exhibit different characteristics than skin layers of conventionally molded parts. As a result, parts molded under constant pressure may have better optical properties than parts of conventionally molded parts.

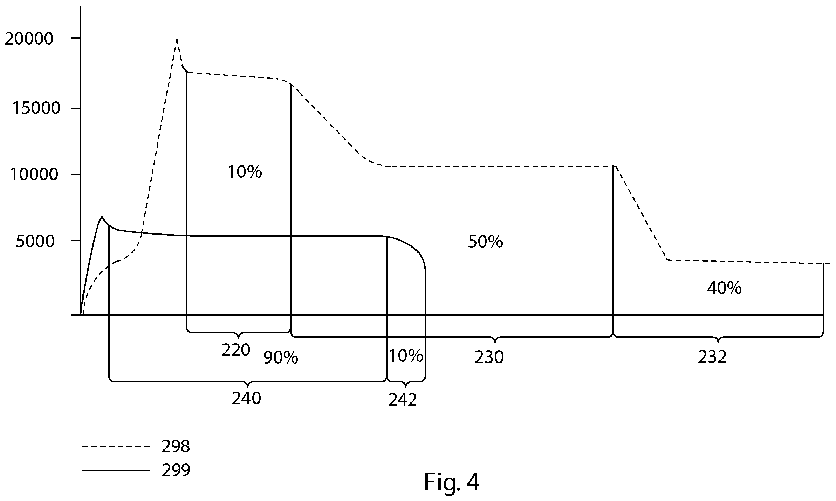

Turning now to FIG. 4, the various stages of fill are broken down as percentages of overall fill time. For example, in an conventional high variable pressure injection molding process, the fill period 220 makes up about 10% of the total fill time, the packing period 230 makes up about 50% of the total fill time, and the cooing period 232 makes up about 40% of the total fill time. On the other hand, in the high productivity injection molding process in accordance with the current invention, the fill period 240 makes up about 90% of the total fill time while the cooling period 242 makes up only about 10% of the total fill time. The high productivity injection molding process needs less cooling time because the molten plastic material is cooling as it is flowing into the mold cavity. Thus, by the time the mold cavity is filled, the molten plastic material has cooled significantly, although not quite enough to freeze off in the center cross section of the mold cavity, and there is less total heat to remove to complete the freezing process. Additionally, because the molten plastic material remains liquid throughout the fill, and packing pressure is transferred through this molten center cross section, the molten plastic material remains in contact with the mold cavity walls (as opposed to freezing off and shrinking away). As a result, the high productivity injection molding process described herein is capable of filling and cooling a molded part in less total time than in a conventional high variable pressure injection molding process.

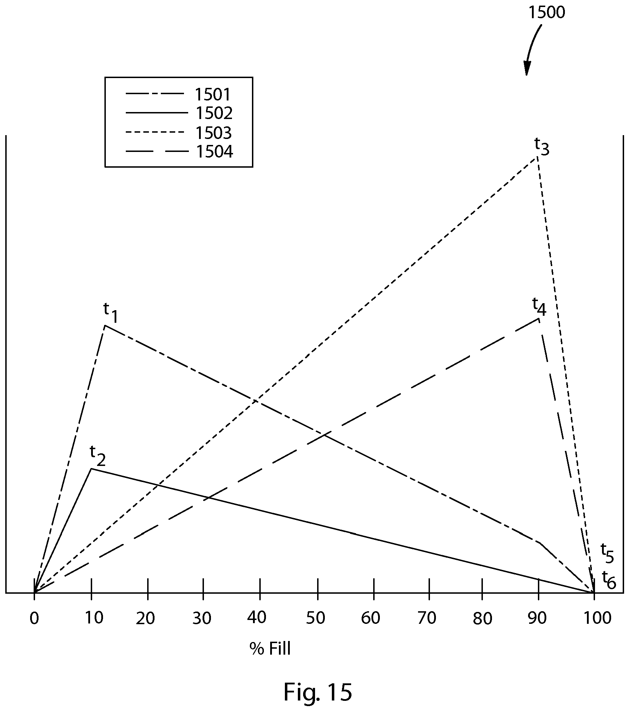

A peak power and peak flow rate vs. percentage of mold cavity fill chart 1500 is illustrated in FIG. 15 for both conventional high variable pressure processes and for high productivity injection molding processes. The left vertical axis of the chart 1500 corresponds to flow rate in cc/s, the right vertical axis of the chart 1500 corresponds to peak power in watts, and the horizontal axis corresponds to a percentage of the mold cavity that is full of thermoplastic material. The peak power for the high productivity injection molding process is illustrated by line 1501 and the peak flow rate for the high productivity injection molding process is illustrated by line 1502. Similarly, the peak power for the conventional high variable pressure process is illustrated by line 1503 and the peak flow rate for the conventional high variable pressure process is illustrated by line 1504. "$t_1$" corresponds to the time at peak power for the high productivity injection molding process, "$t_2$" corresponds to the time at peak flow rate for the high productivity injection molding process, "$t_3$" corresponds to the time at peak power for the conventional high variable pressure process, "$t_4$" corresponds to the time at peak flow rate for the conventional high variable pressure process, "$t_5$" corresponds to the time at end of fill for the high productivity injection molding process, and "$t_6$" corresponds to the time at end of fill for the conventional high variable pressure process.

In the high productivity injection molding process, the peak power load occurs at a time $t_1$, which is approximately equal to the time $t_2$ that the peak flow rate occurs, and then declines steadily through the filling cycle. More specifically, the peak power and the peak flow rate occur in the first 30% of fill, and preferably in the first 20% of fill, and even more preferably in the first 10% of fill. By arranging the peak power and peak flow rate to occur during the beginning of fill, the thermoplastic material is not subject to the extreme conditions when it is closer to freezing. It is believed that this results in superior physical properties of the molded parts.

The power level generally declines slowly through the filling cycle following the peak power load. Additionally, the flow rate generally declines slowly through the filling cycle following the peak flow rate because the fill pressure is maintained substantially constant. As illustrated above, the peak power level is lower than the peak power level for a conventional process, generally 30-50% lower and the peak flow rate is lower than the peak flow rate for a conventional process, generally 30-50% lower.

Similarly, the peak power load for a conventional high variable pressure process occurs at a time $t_3$, which is approximately equal to the time $t_4$ that the peak flow rate occurs. However, unlike the high productivity injection molding process, the peak power and flow rate for the conventional high variable pressure process occur in the final 10%-30% of fill, which subjects the thermoplastic material to extreme conditions as it is in the process of freezing. Also unlike the high productivity injection molding process, the power level in the conventional high variable pressure process generally declines rapidly through the filling cycle following the peak power load. Similarly, the flow rate in a conventional high variable pressure process generally declines rapidly through the filling cycle following the peak flow rate.

In the disclosed high productivity injection molding method for molding a high L/T part, the part is molded by injecting a molten thermoplastic polymer into a mold cavity at an increasing flow rate to achieve a desired injection pressure and then decreasing the flow rate over time to maintain a substantially constant injection pressure. The high productivity injection molding method and device are particularly advantageous when molding thinwall parts (e.g., parts having an L/T ratio > 100 < 1000) and when using shot sizes of between 0.1g and 100g. It is especially advantageous that the maximum flow rate occur within the first 30% of cavity fill, preferably within the first 20% of cavity fill, and even more preferably within the first 10% of cavity fill. By adjusting the filling pressure profile the maximum flow rate occurs within these preferred ranges of cavity fill, the molded part will have at least some of the physical advantages described above (e.g., better strength, better optical properties, etc.) because the crystalline structure of the molded part is different from a conventionally molded part. Moreover, because high L/T products are thinner, these products require less pigment to impart a desired color to the resulting product. Furthermore, in no-pigment parts, the parts will have less visible deformities due to the more consistent molding conditions. Using less or no pigment saves costs.

Alternatively, the peak power may be adjusted to maintain a substantially constant injection pressure. More specifically, the filling pressure profile may be adjusted to cause the peak power to occur in the first 30% of the cavity fill, preferably in the first 20 % of the cavity fill, and even more preferably in the first 10% of the cavity fill. Adjusting the process to cause the peak power to occur within the preferred ranges, and then to have a decreasing power throughout the remainder of the cavity fill results in the same benefits for the molded part that were described above with respect to adjusting peak flow rate. Moreover, adjusting the process in the manner described above is particularly advantageous for thinwall parts (e.g., L/T ratio > 100 < 1000) and for shot sizes of between 0.1g and 100g).

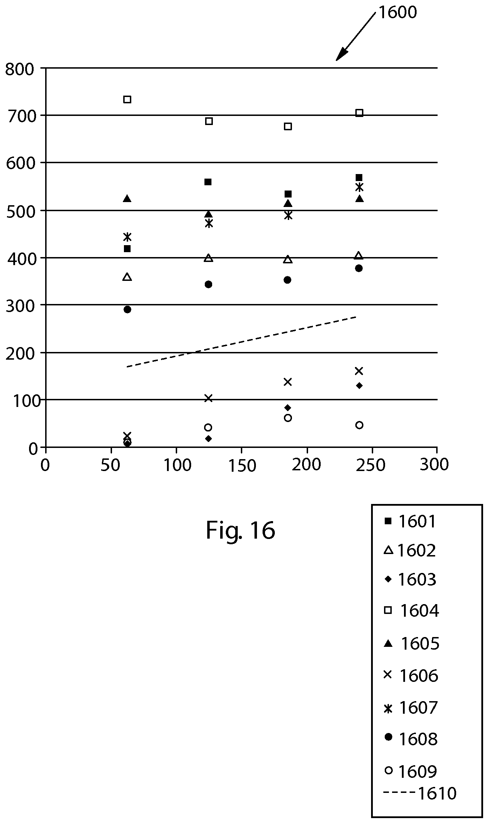

The high productivity injection molding methods disclosed herein also require less power for given L/T ratios than conventional high variable pressure injection molding systems, as illustrated in FIG. 16, which illustrates a peak power flow factor vs. L/T chart 1600. In the chart of FIG. 16, the vertical axis corresponds to peak power flow factor in W/cm3 and the horizontal axis corresponds to mold cavity L/T ratio. FIG. 16 represents test data collected for multiple injection molding cycles for both a conventional high variable pressure injection molding process and the disclosed high productivity injection molding process. The conventional high variable pressure process was run at two different injection rates, both 20.32 cm/s (8 in/s) and 15.24 cm/s (6 in/sec). Additionally, several thermoplastic materials having different MFI values were also tested. More specifically, thermoplastic materials having 55 MFI, 35 MFI, and 12 MFI were tested. The data point symbols in the chart correspond to the processes, injection rates, and MFI values as follows:

Symbol 1601 - Conventional high variable pressure, 20.32 cm/s, 35 MFI;
Symbol 1602 - Conventional high variable pressure, 15.24 cm/s, 35 MFI;
Symbol 1603 - High productivity process, 35 MFI;
Symbol 1604 - Conventional high variable pressure, 20.32 cm/s, 12 MFI;
Symbol 1605 - Conventional high variable pressure, 15.24 cm/s, 12 MFI;
Symbol 1606 - High productivity process, 12 MFI;
Symbol 1607 - Conventional high variable pressure, 20.32 cm/s, 55 MFI;
Symbol 1608 - Conventional high variable pressure, 15.24 cm/s, 55 MFI; and
Symbol 1609 - High productivity process, 55 MFI.

As illustrated by line 1610 in Fig. 16, the disclosed high productivity injection molding methods require less power (i.e., have a lower peak power flow factor) to fill a given mold cavity than conventional high variable pressure injection molding processes for any L/T ratio between 100 and 250, and this relationship extends to L/T of 300, and 400 L/T and greater, up to 1000 L/T or more. In fact, the disclosed high productivity injection molding methods require power less than that calculated by the formula:

$$Y = 0.7218x + 129.74 \text{ (which corresponds to line 1610 in Fig. 16)}$$

(which corresponds to line 1610 in Fig. 16)

Where Y = peak power flow factor; and
X - L/T ratio

In all cases, conventional high variable pressure injection molding systems require more power than that calculated by the formula above.

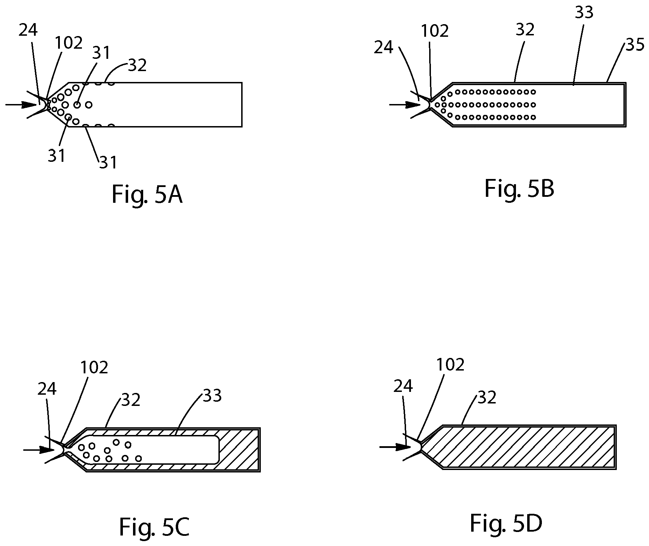

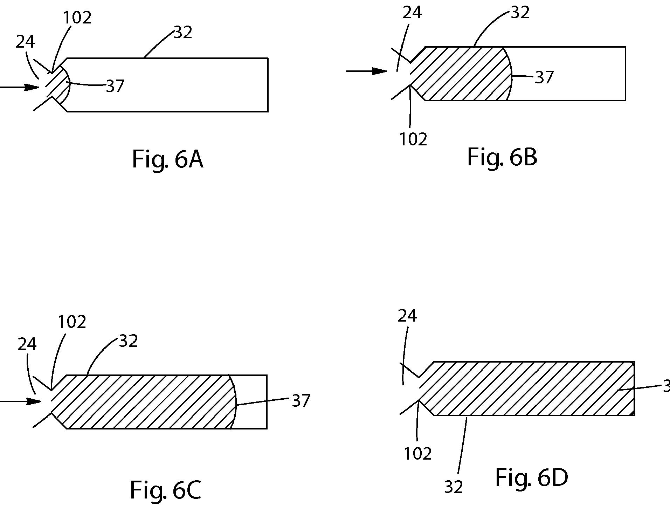

Turning now to FIGS. 5A-5D and FIGS. 6A-6D a portion of a mold cavity as it is being filled by a conventional high variable pressure injection molding machine (FIGS. 5A-5D) and as it is being filled by a substantially constant pressure injection molding machine (FIGS. 5A-5D) is illustrated.

As illustrated in FIGS. 5A-5D, as the conventional high variable pressure injection molding machine begins to inject molten thermoplastic material 24 into a mold cavity 32 through the gate 30, the high injection pressure tends to inject the molten thermoplastic material 24 into the mold cavity 32 at a high rate of speed, which causes the molten thermoplastic material 24 to flow in laminates 31, most commonly referred to as laminar flow (FIG. 5A). These outermost laminates 31 adhere to walls of the mold cavity and subsequently cool and freeze, forming a frozen boundary layer 33 (FIG. 5B), before the mold cavity 32 is completely full. As the thermoplastic material freezes, however, it also shrinks away from the wall of the mold cavity 32, leaving a gap 35 between the mold cavity wall and the boundary layer 33. This gap 35 reduces cooling efficiency of the mold. Molten thermoplastic material 24 also begins to cool and freeze in the vicinity of the gate 30, which reduces the effective cross-sectional area of the gate 30. In order to maintain a constant volumetric flow rate, the conventional high variable pressure injection molding machine must increase pressure to force molten thermoplastic material through the narrowing gate 30. As the thermoplastic material 24 continues to flow into the mold cavity 32, the boundary layer 33 grows thicker (FIG. 5C). Eventually, the entire mold cavity 32 is substantially filled by thermoplastic material that is frozen (FIG. 5D). At this point, the conventional high pressure injection molding machine must maintain a packing pressure to push the receded boundary layer 33 back against the mold cavity 32 walls to increase cooling.

A high productivity injection molding machine, on the other hand, flows molten thermoplastic material into a mold cavity 32 with a constantly moving flow front 37 (FIGS. 6A-6D). The thermoplastic material 24 behind the flow front 37 remains molten until the mold cavity 37 is substantially filled (i.e., 99% or more filled) before freezing. As a result, there is no reduction in effective cross-sectional area of the gate 30, which may be between 70% and 100%, preferably between 80% and 90%, of the nominal wall thickness of the molded part. Moreover, because the thermoplastic material 24 is molten behind the flow front 37, the thermoplastic material 24 remains in contact with the walls of the mold cavity 32. As a result, the thermoplastic material 24 is cooling (without freezing) during the fill portion of the molding process. Thus, the cooling portion of the disclosed high productivity injection molding process need not be as long as a conventional process.

Because the thermoplastic material remains molten and keeps moving into the mold cavity 32, less injection pressure is required than in conventional molds. In one embodiment, the injection pressure may be 6,000 psi or less. As a result, the injection systems and clamping systems need not be as powerful. For example, the disclosed high productivity injection molding devices may use clamps requiring lower clamping forces, and a corresponding lower clamping power source. Moreover, the disclosed high productivity injection molding machines, because of the lower power requirements, may employ electric presses, which are generally not powerful enough to use in conventional class 101 and 102 injection molding machines that mold thinwall parts at high variable pressures. Even when electric presses are sufficient to use for some simple, molds with few mold cavities, the process may be improved with the disclosed high productivity injection molding methods and devices as smaller, less expensive electric motors may be used. The disclosed high productivity injection molding machines may comprise one or more of the following types of electric presses, a direct servo drive motor press, a dual motor belt driven press, a dual motor planetary gear press, and a dual motor ball drive press having a power rating of 200 HP or less.

TEST DATA

A mold viscosity test was completed for a test mold, which was used to generate the data in the force vs. L/T chart in Fig. 16. This test determined the optimal injection rate was 6" per second. An additional rate of 8" per second was run to illustrate the relationship between injection rate and molding pressure. As mentioned above, the current industry practice is to inject at the maximum rate the molding press is capable of achieving. The data below illustrates that increasing injection rate leads to substantial increases in molding pressures, such as indicated by the 8" per second data runs. Injecting at even faster rates such as 10" per second, 20" per second or faster, will lead to substantial increases in pressure. The test data is summarized in the tables below.

| Data for Peak Power Flow Factor vs. L/T Graph | | | | | | |
|---|---|---|---|---|---|---|
| **Material** | **Thickness** | **L/T** | **Peak Power Flow Factor @ 8 in/s** | **Peak Power Flow Factor @ 6 in/sec** | **Peak Power Flow Factor for New Process** | **Graph Labels** |
| 35 MFI | 2 | 62.5 | 420.15 | 360.53 | 6.15 | 35 MFI: PPFF @ 8 in/s Conventional |
| | 2 | 125 | 560.70 | 400.98 | 18.13 | 35 MFI: PPFF @ 6 in/s Conventional |
| | 2* | 185 | 534.29 | 397.56 | 82.71 | 35 MFI: PPFF New Process |
| | 2 | 240 | 568.47 | 404.40 | 130.28 | |
| 12 MFI | 2 | 62.5 | 733.61 | 526.84 | 22.82 | 12 MFI: PPFF @ 8 in/s Conventional |
| | 2 | 125 | 687.22 | 492.85 | 103.45 | 12 MFI: PPFF @ 6 in/s Conventional |
| | 2 | 185 | 675.69 | 518.06 | 136.84 | 12 MFI: PPFF New Process |
| | 2 | 240 | 703.58 | 528.70 | 159.89 | |

(continued)

| Data for Peak Power Flow Factor vs. L/T Graph | | | | | | |
|---|---|---|---|---|---|---|
| Material | Thickness | L/T | Peak Power Flow Factor @ 8 in/s | Peak Power Flow Factor @ 6 in/sec | Peak Power Flow Factor for New Process | Graph Labels |
| 55 MFI | 2 | 62.5 | 444.59 | 291.68 | 7.61 | 55 MFI: PPFF @ 8 in/s Conventional |
| | 2 | 125 | 473.08 | 344.33 | 42.70 | 55 MFI: PPFF @ 6 in/s Conventional |
| | 2 | 185 | 490.32 | 353.19 | 62.25 | 55 MFI: PPFF New Process |
| | 2 | 240 | 547.91 | 377.98 | 43.60 | |
| Reference Line | Thickness | L/T | Values | * The Peak Power Flow Factor data point for the New Process using the 35 MFI at a 185 L/T was calculated using the trendline equation (y =1.0857x-80.383); where x=L/T value, and y=peak power flow rate. | | |
| | 2 | 62.5 | 157.25 | | | |
| | 2 | 125 | 223.89 | | | |
| | 2 | 185 | 245.02 | | | |
| | 2 | 240 | 268.93 | | | |

| Summary of Peak Volumetric Flow Rate Data | | | | | |
|---|---|---|---|---|---|
| Material | Thickness | L/T | Volumetric Flow Rate (m$^3$/s) @ 8 in/s | Volumetric Flow Rate (m$^3$/s) @ 6 in/s | Volumetric Flow Rate (m$^3$/s) for New Process |
| 35 MFI | 2 | 62.5 | 9.160E-05 | 8.262E-05 | 4.967E-06 |
| | 2 | 125 | 1.167E-04 | 9.339E-05 | 1.610E-05 |
| | 2* | 185 | 1.185E-04 | 9.160E-05 | 3.719E-05 |
| | 2 | 240 | 1.185E-04 | 9.160E-05 | 7.671E-05 |
| 12 MFI | 2 | 62.5 | 1.042E-04 | 8.441E-05 | 1.038E-05 |
| | 2 | 125 | 1.131E-04 | 8.980E-05 | 3.791E-05 |
| | 2 | 185 | 1.149E-04 | 8.980E-05 | 4.300E-05 |
| | 2 | 240 | 1.167E-04 | 8.980E-05 | 6.725E-05 |
| 55 MFI | 2 | 62.5 | 1.006E-04 | 8.441E-05 | 8.360E-06 |
| | 2 | 125 | 1.167E-04 | 9.519E-05 | 3.327E-05 |
| | 2 | 185 | 1.203E-04 | 9.519E-05 | 4.959E-05 |
| | 2 | 240 | 1.203E-04 | 9.519E-05 | 4.669E-05 |
| * The Volumetric Flow Rate data point for the New Process using the 35 MFI at a 185 L/T was calculated using the trendline equation (y = 2E-06e0.0158x); where x = L/T value, and y = volumetric flow rate. | | | | | |

| Material | MFI |
|---|---|
| Braskem FPT350WV3 | 35 |
| Braskem FT120W2 | 12 |

(continued)

| Material | MFI |
|---|---|
| Flint Hills 5155 | 55 |

| Injection Screw Data | |
|---|---|
| Screw Diameter (mm) | 30 |
| Injection Area (mm$^2$) | 706.86 |
| Injection Area (in$^2$) | 1.096 |

| Conversion factors |
|---|
| 1 in=0.0254m |
| 1 mm = 0.03937 in |
| 1 in$^3$/s = 16.38706 cm$^3$/s |
| 1 psi = 6894.757 pa |
| 1 Watt = 0.00134 hp |

When comparing the peak flow rate and peak power levels required to mold an injection molded part, the melt temperatures and mold temperatures should be consistent between the conditions run for both the conventional and the high productivity process. Furthermore, these temperature settings should are generally based on the recommended temperatures from the resin manufacturer or within suitable ranges to ensure the resin is processed as intended by the manufacturer.

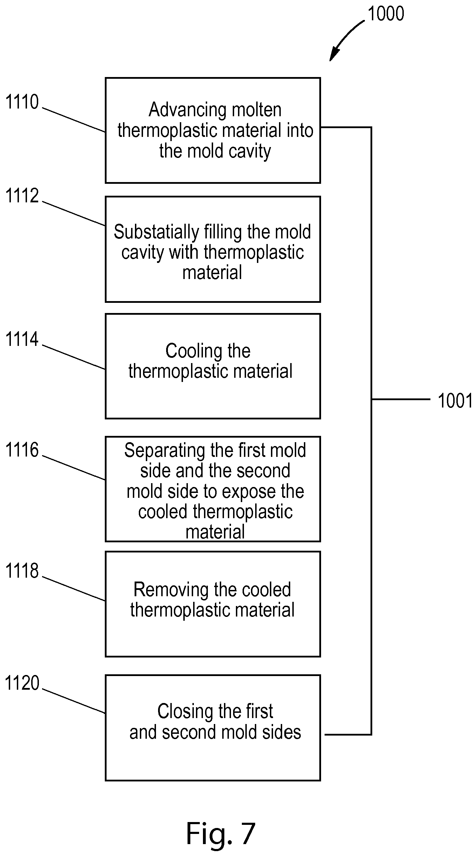

Turning now to FIG. 7, operation of an example molding cycle 1000 for the high productivity injection molding process is illustrated. The molding cycle 1000 is carried out on a high productivity injection molding machine, for example, on the high productivity injection molding machine of FIG. 1. More specifically, the example molding cycle 1000 is carried out on a high productivity injection molding machine having a mold including a first mold side and a second mold side, in accordance with the current invention, at least one of the first mold side and the second mold side having an average thermal conductivity of more than 51.9 W/m °C (30 BTU/HR FT °F) and preferably less than or equal to 385.79 W/m °C (223 BTU/HR FT °F), and a mold cavity that is formed between the first mold side and the second mold side. In some preferred embodiments, both the first and second mold side may have an average thermal conductivity of more than 51.9 W/m °C (30 BTU/HR FT °F) and less than or equal to 385.79 W/m °C (223 BTU/HR FT °F).

Some preferred materials for manufacturing the first and/or second mold sides include aluminum (for example, 2024 aluminum, 2090 aluminum, 2124 aluminum, 2195 aluminum, 2219 aluminum, 2324 aluminum, 2618 aluminum, 5052 aluminum, 5059 aluminum, aircraft grade aluminum, 6000 series aluminum, 6013 aluminum, 6056 aluminum, 6061 aluminum, 6063 aluminum, 7000 series aluminum, 7050 aluminum, 7055 aluminum, 7068 aluminum, 7075 aluminum, 7076 aluminum, 7150 aluminum, 7475 aluminum, QC-10, Alumold™, Hokotol™, Duramold 2™, Duramold 5™, and Alumec 99™), BeCu (for example, C17200, C 18000, C61900, C62500, C64700, C82500, Moldmax LH™, Moldmax HH™, and Protherm™, Copper, and any alloys of aluminum (e.g., Beryllium, Bismuth, Chromium, Copper, Gallium, Iron, Lead, Magnesium, Manganese, Silicon, Titanium, Vanadium, Zinc, Zirconium), any alloys of copper (e.g., Magnesium, Zinc, Nickel, Silicon, Chromium, Aluminum, Bronze). These materials may have Rockwell C (Rc) hardnesses of between 0.5 Rc and 20 Rc, preferably between 2 Rc and 20 Rc, more preferably between 3 Rc and 15 Rc, and more preferably between 4Rc and 10 Rc. While these materials may be softer than tool steels, the thermal conductivity properties are more desirable. The disclosed high productivity injection molding methods and devices advantageously operate under molding conditions that allow molds made of these softer, higher thermal conductivity, materials to extract useful lives of more than 1 million cycles, preferably between 1.25 million cycles and 10 million cycles, and more preferably between 2 million cycles and 5 million cycles.

Initially, molten thermoplastic material is advanced into a mold cavity that defines a thin-walled part (e.g., 100 < L/T < 1000) at 1110. A shot of molten thermoplastic material may be between 0.5g and 100g and may be advanced through three or fewer gates into the mold cavity. In some cases one or more of the three of fewer gates may have a cross-sectional area that is between 70% and 100% of a nominal wall thickness of a part that is formed in the mold cavity, and preferably between 80% and 90% of the nominal wall thickness. In some examples, this percentage may correspond to a gate size of between 0.5 mm and 10 mm..

Molten thermoplastic material is advanced into the mold cavity until the mold cavity is substantially filled at 1112. The mold cavity may be substantially filled when the mold cavity is more than 90% filled, preferably more than 95% filled and more preferably more than 99% filled. After the mold cavity is substantially filled, the molten thermoplastic material is cooled at 1114 until the molten thermoplastic material is substantially frozen or solidified. The molten thermoplastic material may be actively cooled with a cooling liquid flowing through at least one of the first and second mold sides, or passively cooled through convection and conduction to the atmosphere.

After the thermoplastic material is cooled, the first and second mold sides may be separated to expose the cooled thermoplastic material at 1116. The cooled thermoplastic material (in the form of the molded part) may be removed from the mold at 1118. The thermoplastic material may be removed by, for example, ejection, dumping, extraction (manually or via an automated process), pulling, pushing, gravity, or any other method of separating the cooled thermoplastic material from the first and second mold sides.

After the cooled thermoplastic material is removed from the first and second mold sides, the first and second mold sides may be closed, reforming the mold cavity, at 1120, which prepares the first and second mold sides to receive a new shot of molten thermoplastic material, thereby completing a single mold cycle. Cycle time 1001 is defined as a single iteration of the molding cycle 1000. A single molding cycle may take between 2 seconds and 15 seconds, preferably between 8 seconds and 10 seconds, depending on the part size and material.

The disclosed high productivity injection molding methods advantageously reduce cycle time for the molding process while increasing part quality. Moreover, the disclosed high productivity injection molding machines may employ, in some embodiments, electric presses, which are generally more energy efficient and require less maintenance than hydraulic presses. Additionally, the disclosed high productivity molding methods on injection molding machines allows them to be capable of employing more flexible support structures and more adaptable delivery structures, such as wider platen widths, increased tie bar spacing, elimination of tie bars, lighter weight construction to facilitate faster movements, and non-naturally balanced feed systems. Thus, the high productivity injection molding machines may be modified to fit delivery needs and are more easily customizable for particular molded parts.

Additionally, the disclosed high productivity injection molding methods allow the molds to be made from softer materials (e.g., materials having a Rc of less than about 30), which have higher thermal conductivities (i.e., thermal conductivities greater than about 51.9 W/m °C or 30 BTU/HR FT °F), which leads to molds with improved cooling capabilities and more uniform cooling. Because of the improved cooling capabilities, the disclosed high productivity injection molds may include simplified cooling systems. Generally speaking, the simplified cooling systems include fewer cooling channels and the cooling channels that are included may be straighter, having fewer machining axes.

Cooling systems of all sorts may be categorized in a system of cooling complexity levels, with cooling complexity level zero representing the simplest cooling system and higher cooling complexity levels representing progressively more complex cooling systems. This system of cooling system categorization is discussed below in more detail. However, conventional high productivity consumer product injection molding machines (e.g., class 101 and class 30 molding machines) employ complex cooling systems to reduce cycle time and improve productivity. Generally speaking, high productivity consumer product injection molding machines include complex cooling systems (i.e., cooling systems having a level four cooling system complexity level or higher). Level zero to level three cooling complexity level systems generally do not produce cooling capacity that is sufficient for conventional high productivity injection molds, which include molds made of high hardness, low thermal conductivity materials.

Advantageously, the disclosed low constant pressure injection molds include cooling systems having cooling complexity levels of three or less, preferably cooling complexity level three, two, or one, which lowers production costs and increases efficiency over conventional high pressure injection molding machines.

As used herein, a cooling complexity level zero mold assembly is defined as a mold assembly that includes no active cooling system. In other words, a cooling complexity level zero mold assembly is only passively cooled through the conduction of heat through the mold sides and support plates, and eventually to the atmosphere surrounding the mold assembly. Cooling complexity level zero mold assemblies typically have relatively long cycle times (as it takes a significant amount of time for the plastic within the mold to freeze because of the slow cooling rate). As a result, high productivity consumer product mold assemblies (e.g., mold assemblies used in class 101 and class 30 molding machines) do not use cooling complexity level zero mold assemblies.

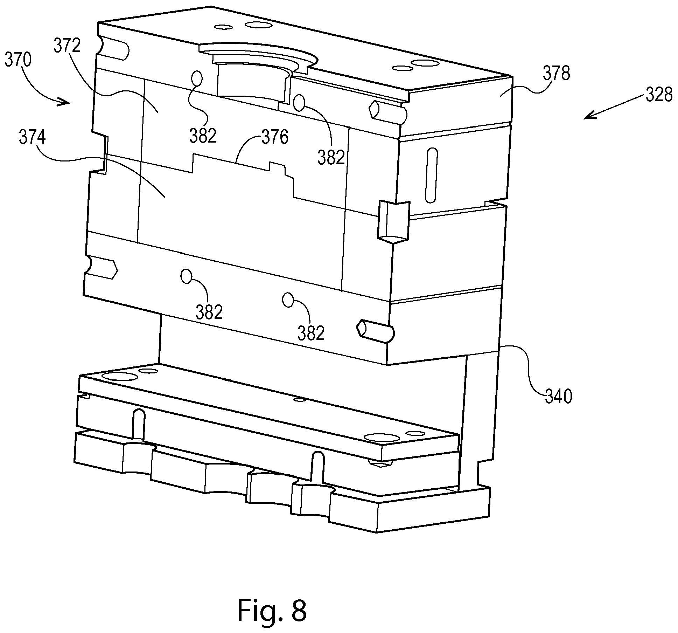

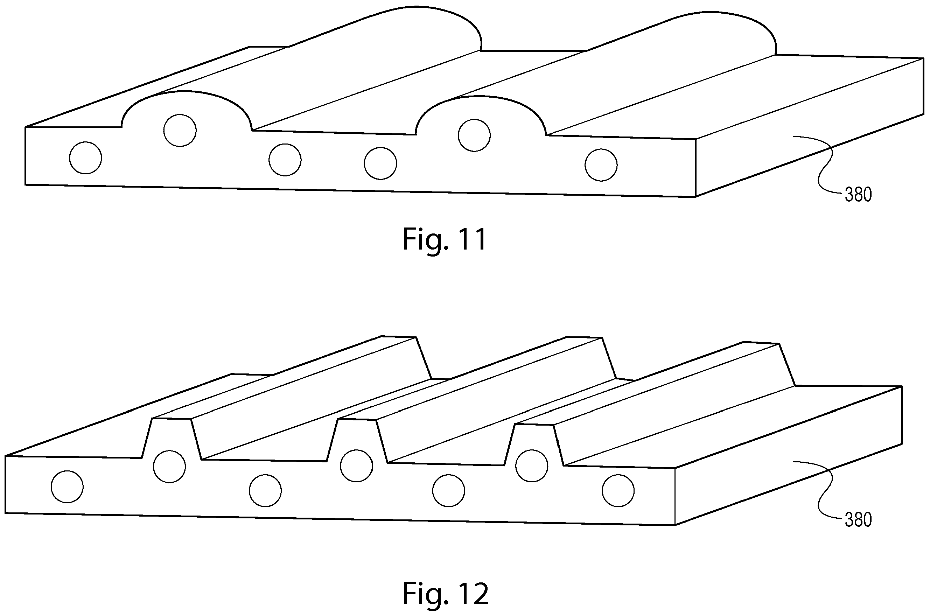

Turning now to Figs. 8-12, different embodiments of a cooling complexity level one mold assembly 328 (and/or different embodiments of a support plate in the mold assembly) are illustrated. The mold assembly 328 may include a mold 370 having a first side 372 and a second side 374. The first side 372 and the second side 374 form a mold cavity 376 therebetween. The first side 372 may be supported by a first support plate 378 and the second side 374 may be supported by a second support plate 380. The first and second support plates 378, 380 may be attached to a press (not shown), which actuates to move the first and second sides 372, 374 during the molding process. One or more cooling lines 382 may be formed in one or more of the support plates 378, 380. Because the first and second sides 372, 374 are made from a highly thermally conductive material, heat flows through the first and second sides 372, 374 to the support plates 378, 380 at a rate that is sufficient to cool plastic in the mold cavity 376 in an acceptable amount of time.

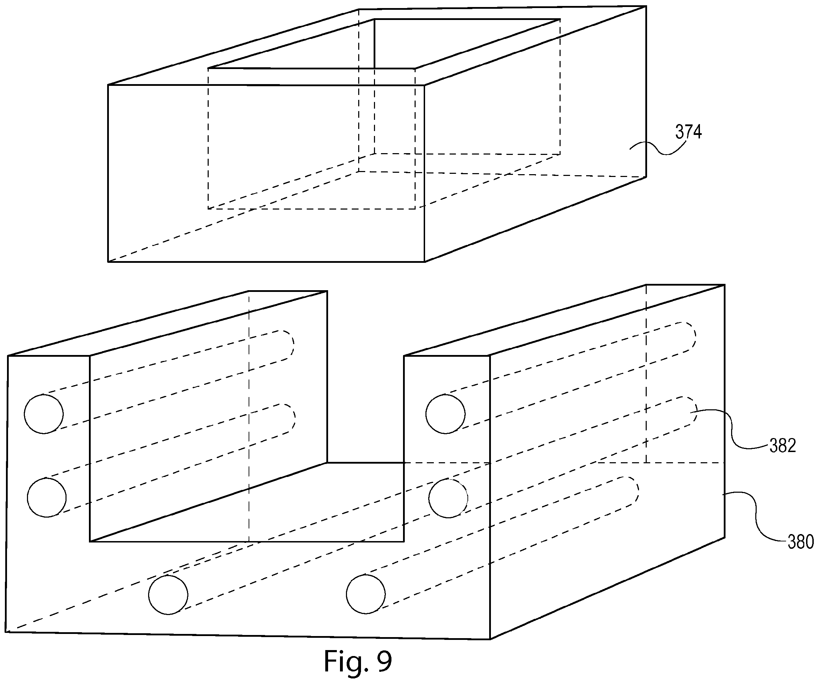

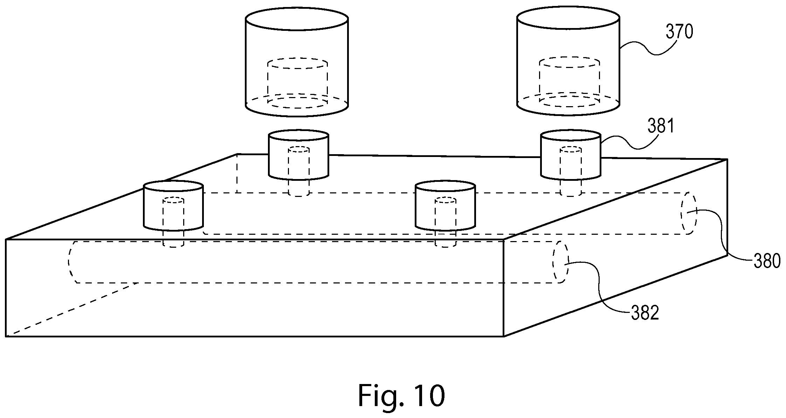

The support plates 378, 380 may include posts or other projections 381 that extend outward, away from the support plate 378, 380, towards the mold 370. The cooling lines 382 may extend into the projections 381. The mold 370 may include a complementary feature so that the mold may fit around, within (Fig. 9), or upon (Fig. 10) the projection 381. In this way, the cooling lines 382 may be located closer to the mold cavity without extending the cooling lines 382 into the mold 370 or into the first and second mold sides 372, 374. As a result, the support plates 378, 380 may receive molds having a variety of different mold cavity shapes. The molds may thus be formed without cooing lines integrated into the first and/or second sides 372, 374, which reduces manufacturing costs of the molds 370.

Conventional high output consumer product injection mold assemblies do not use cooling complexity level one mold assemblies because such mold assemblies do not adequately cool plastic with in a mold cavity formed by two high hardness, low thermal conductivity materials. Cooling complexity level one mold assemblies are defined as containing all active cooling lines 382 within the support plates 378, 380, even if more than one machining axis is needed to form the cooling lines 382. In the example of Figs. 8-12, the mold may be a stack mold, a cube mold, a shuttle mold, a helicopter mold, a mold having rotating platens, or other multi-cavity molds to increase productivity if desired.

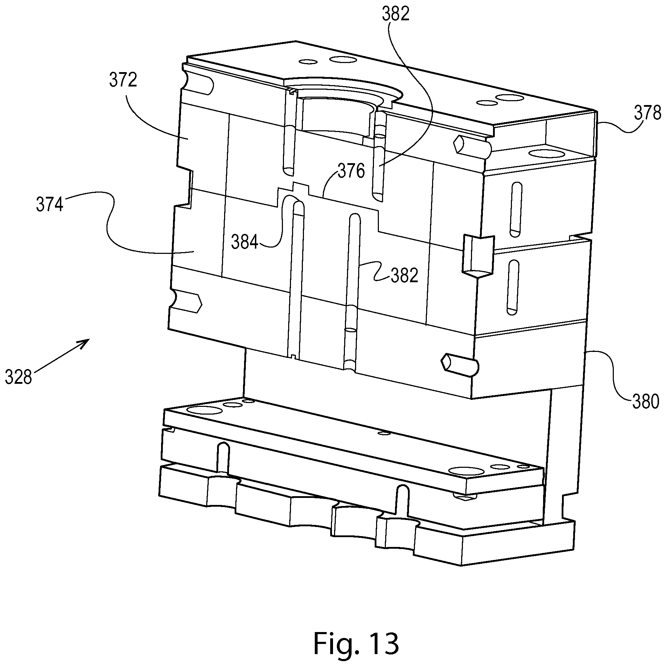

Turning now to Fig. 13, a cooling complexity level two mold assembly 328 is illustrated. The cooling complexity level two mold assembly 328 is identical to the cooling complexity level one mold assembly 328 of Fig. 5, with the exception that the cooling lines 382 in the embodiment of Fig. 13 extend through at least one support plate 378, 380 and into at least one mold side 372, 374 (i.e., as opposed to the cooling lines 382 only extending through the support plates 378, 380). The cooling lines 382 have terminal ends 384. However, each cooling line 382 is machined along an axis that is parallel to a single machining axis. The cooling lines 382 may include a baffle to facilitate cooling fluid flow through the cooling line 382. Cooling complexity level two mold assemblies have not been used in high output consumer product injection molding machines (i.e., class 101 and class 30 injection molding machines) because cooling complexity level two mold assemblies do not have enough flexibility to machine cooling lines close to the mold surfaces of the mold cavity and therefore, cooling complexity level two mold assemblies do not provide adequate cooling for conventional high output mold assemblies having high hardness, low thermal conductivity molds.

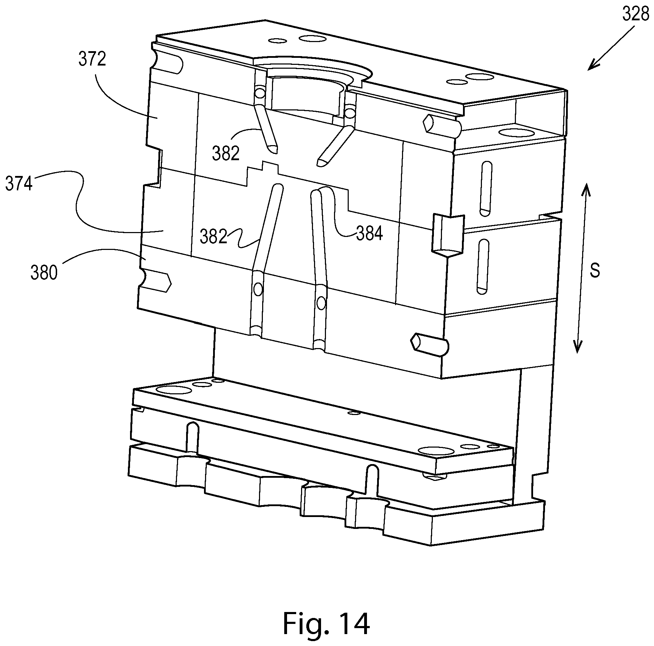

Turning now to Fig. 14 a cooling complexity level three mold assembly 328 is illustrated. A cooling complexity level three mold assembly 328 is defined by cooling channels 382 having at least two different machining axes. At least one cooling line 382 may include two different machining axes and a terminal end. More particularly, the cooling line 382 may have a bend or turn. For example, the cooling line 382 may include a first machining axis that is substantially parallel to the opening-closing stroke S of the mold assembly 328 and a second machining axis that is angled with respect to the first machining axis. Like cooling complexity level two mold assemblies, cooling complexity level three mold assemblies have not been used in high output consumer product injection molding machines (e.g., class 101 and class 30 injection molding machines) because level three cooling complexity does not have enough flexibility to machine cooling lines close to the mold surfaces of the mold cavity and therefore, cooling complexity level three mold assemblies do not provide adequate cooling for conventional high output mold assemblies having high hardness, low thermal conductivity molds.

The lower injection pressures of the high productivity injection molding machines allow molds made of these softer materials to extract 1 million or more molding cycles, which would not be possible in high pressure injection molding machines as these materials would fail before 1 million molding cycles in a high pressure injection molding machine.

It is noted that the terms "substantially," "about," and "approximately," unless otherwise specified, may be utilized herein to represent the inherent degree of uncertainty that may be attributed to any quantitative comparison, value, measurement, or other representation. These terms are also utilized herein to represent the degree by which a quantitative representation may vary from a stated reference without resulting in a change in the basic function of the subject matter at issue. Unless otherwise defined herein, the terms "substantially," "about," and "approximately" mean the quantitative comparison, value, measurement, or other representation may fall within 20% of the stated reference.

It should now be apparent that the various products illustrated and described herein may be produced by a low, substantially constant pressure molding process. While particular reference has been made herein to products for containing consumer goods or consumer goods products themselves, it should be apparent that the molding method discussed herein may be suitable for use in conjunction with products for use in the consumer goods industry, the food service industry, the transportation industry, the medical industry, the toy industry, and the like. Moreover, one skilled in the art will recognize the teachings disclosed herein may be used in the construction of stack molds, multiple material molds including rotational and core back molds, in combination with in-mold decoration, insert molding, in mold assembly, and the like.

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 mm" is intended to mean "about 40 mm."

While particular embodiments of the present invention have been illustrated and described, it would be obvious to those skilled in the art that various other changes and modifications can be made without departing from the scope of the invention. It is therefore intended to cover in the appended claims all such changes and modifications that are within the scope of this invention.

## Claims

1.  A method for operating a high productivity injection molding machine, the method comprising:

    providing an injection molding machine having a mold including a first mold side and a second mold side, at least one of the first mold side and the second mold side having an average thermal conductivity of more than 51.9 W/m °C (30 BTU/HR FT °F), and a mold cavity that is formed between the first mold side and the second mold side;
    operating the injection molding machine through at least one injection molding cycle, the injection molding cycle including,
    advancing molten thermoplastic material into the mold cavity;
    substantially filling the mold cavity with thermoplastic material;
    cooling the thermoplastic material;
    separating the first mold side and the second mold side to expose the cooled thermoplastic material;
    removing the cooled thermoplastic material; and
    closing the first mold side and the second mold side;
    **characterized in that** the molten plastic material is injected into the mold cavity at a substantially constant pressure for a fill time period in which molten plastic material flows into the mold cavity, wherein the fill time period (240) makes up about 90% of the total fill time and the period for cooling (242) makes up about 10% of the total fill time.

2.  The method of any prior claim, wherein the providing includes providing the injection molding machine wherein each of the first and second mold sides has an average thermal conductivity of 51.9 W/m °C (30 BTU/HR FT °F).

3.  The method of any prior claim, wherein:

    the providing includes providing the injection molding machine with three or fewer gates that are fluidly connected to the mold cavity; and
    the advancing includes advancing the thermoplastic material through the three or fewer gates.

4.  The method of claim 3, wherein the providing includes providing the injection molding machine with the three or fewer gates, wherein at least one of the three or fewer gates has a cross-sectional diameter that is less than 80% of a nominal wall thickness of a part that is formed by cooled thermoplastic material in the mold cavity.

5.  The method of claim 4, wherein the providing includes providing the injection molding machine with the three or fewer gates, wherein the at least one gate with the cross-sectional diameter that is less than 80% of the nominal wall thickness has an effective gate diameter of between 0.5 mm and 10 mm.

6.  The method of any prior claim, wherein the providing includes providing the injection molding machine with the thin-walled mold cavity, which has an L/T ratio that is greater than 100.

7.  The method of any prior claim, wherein the providing includes providing the injection molding machine with the thin-walled mold cavity, which has an L/T ratio that is greater than 100 but less than 1000.

8.  The method of any prior claim, wherein the providing includes providing the injection molding machine with at least four mold cavities.

9.  The method of any prior claim, wherein:

    the providing includes providing the injection molding machine wherein the mold cavity is one of a plurality of mold cavities that are formed between the first and second mold parts, wherein the plurality includes between 16 and 256 mold cavities; and

the advancing includes advancing the thermoplastic material into the plurality of mold cavities.

10. The method of any prior claim, wherein the operating includes operating the injection molding machine through multiple injection molding cycles, wherein each of the injection cycles includes the substantially filling, the cooling, the separating, the removing, and the closing, and each of the injection cycles has a cycle time of between 2 seconds and 15 seconds.

11. The method of any prior claim, wherein the operating includes operating the injection molding machine, wherein each of the injection cycles has a cycle time of between 8 seconds and 10 seconds.

12. The method of any prior claim, wherein the providing includes providing the injection molding machine wherein at least one of the first mold part and the second mold part is made from a material having an average hardness of less than 20 Rc.

13. The method of any prior claim, wherein the providing includes providing the injection molding machine wherein at least one of the first mold part and the second mold part is made from a material selected from the group including: aluminum, beryllium, copper, and any alloys thereof.

**Patentansprüche**

1. Verfahren zum Betreiben einer Spritzgießmaschine mit hoher Produktivität, wobei das Verfahren umfasst:

    Bereitstellen einer Spritzgießmaschine mit einer Form, die eine erste Formseite und eine zweite Formseite aufweist, wobei wenigstens eine von der ersten Formseite und der zweiten Formseite eine mittlere Wärmeleitfähigkeit von mehr als 51,9 W/m °C (30 BTU/HR FT °F) aufweist, und einem Formhohlraum, der zwischen der ersten Formseite und der zweiten Formseite ausgebildet ist;
    Betreiben der Spritzgießmaschine über wenigstens einen Spritzgießzyklus, wobei der Spritzgießzyklus aufweist, Vortreiben von geschmolzenem thermoplastischem Material in den Formhohlraum;
    im Wesentlichen Füllen des Formhohlraumes mit thermoplastischem Material;
    Kühlen des thermoplastischen Materials;
    Trennen der ersten Formseite und der zweiten Formseite, so dass das gekühlte thermoplastische Material freigelegt wird;
    Entfernen des gekühlten thermoplastischen Materials; und
    Schließen der ersten Formseite und der zweiten Formseite;
    **dadurch gekennzeichnet, dass** der geschmolzene Kunststoff in den Formhohlraum bei einem im wesentlichen konstanten Druck für eine Füllzeitspanne eingespritzt wird, in der geschmolzener Kunststoff in den Formhohlraum fließt, wobei die Füllzeitspanne (240) etwa 90% der Gesamtfüllzeit ausmacht und die Zeitspanne für Kühlung (242) etwa 10% der Gesamtfüllzeit ausmacht.

2. Verfahren nach einem der vorstehenden Ansprüche, wobei das Bereitstellen Bereitstellen der Spritzgießmaschine aufweist, wobei jede der ersten und zweiten Formseite eine mittlere Wärmeleitfähigkeit von 51,9 W/m °C (30 BTU/HR FT °F) aufweist.

3. Verfahren nach einem der vorstehenden Ansprüche, wobei:

    das Bereitstellen Bereitstellen der Spritzgießmaschine mit drei oder weniger Eingüssen, die mit dem Formhohlraum in Flüssigkeitsverbindung stehen, aufweist; und
    das Vortreiben Vortreiben des thermoplastischen Materials durch die drei oder weniger Eingüsse beinhaltet.

4. Verfahren nach Anspruch 3, wobei das Bereitstellen Bereitstellen der Spritzgießmaschine mit den drei oder weniger Eingüssen aufweist, wobei wenigstens einer der drei oder weniger Eingüsse einen Querschnittsdurchmesser aufweist, der weniger als 80% einer Nennwanddicke eines Teils ist, das durch gekühltes thermoplastisches Material im Formhohlraum gebildet wird.

5. Verfahren nach Anspruch 4, wobei das Bereitstellen Bereitstellen der Spritzgießmaschine mit den drei oder weniger Eingüssen aufweist, wobei der wenigstens eine Einguss mit dem Querschnittsdurchmesser, der weniger als 80% der Nennwanddicke ist, einen effektiven Eingussdurchmesser von zwischen 0,5 mm und 10 mm aufweist.

**6.** Verfahren nach einem der vorstehenden Ansprüche, wobei das Bereitstellen Bereitstellen der Spritzgießmaschine mit dem dünnwandigen Formhohlraum aufweist, der ein L/T-Verhältnis aufweist, das größer als 100 ist.

**7.** Verfahren nach einem der vorstehenden Ansprüche, wobei das Bereitstellen Bereitstellen der Spritzgießmaschine mit dem dünnwandigen Formhohlraum aufweist, der ein L/T-Verhältnis aufweist, das größer als 100 aber weniger als 1000 ist.

**8.** Verfahren nach einem der vorstehenden Ansprüche, wobei das Bereitstellen Bereitstellen der Spritzgießmaschine mit wenigstens vier Formhohlräumen aufweist.

**9.** Verfahren nach einem der vorstehenden Ansprüche, wobei:

das Bereitstellen Bereitstellen der Spritzgießmaschine aufweist, wobei der Formhohlraum einer von einer Mehrzahl von Formhohlräumen ist, die zwischen den ersten und den zweiten Formteilen ausgebildet sind, wobei die Mehrzahl zwischen 16 und 256 Formhohlräumen aufweist; und
das Vortreiben Vortreiben des thermoplastischen Materials in die Mehrzahl von Formhohlräumen aufweist.

**10.** Verfahren nach einem der vorstehenden Ansprüche, wobei das Betreiben Betreiben der Spritzgießmaschine über mehrere Spritzgießzyklen aufweist, wobei jeder der Einspritzzyklen das im Wesentlichen Füllen, das Kühlen, das Trennen, das Entfernen, und das Schließen aufweist, und jeder der Einspritzzyklen eine Zykluszeit von zwischen 2 Sekunden und 15 Sekunden aufweist.

**11.** Verfahren nach einem der vorstehenden Ansprüche, wobei das Betreiben Betreiben der Spritzgießmaschine aufweist, wobei jeder der Einspritzzyklen eine Zykluszeit von zwischen 8 Sekunden und 10 Sekunden aufweist.

**12.** Verfahren nach einem der vorstehenden Ansprüche, wobei das Bereitstellen Bereitstellen der Spritzgießmaschine aufweist, wobei wenigstens eines von dem ersten Formteil und dem zweiten Formteil aus einem Material hergestellt ist, das eine mittlere Härte von weniger als 20 Rc aufweist.

**13.** Verfahren nach einem der vorstehenden Ansprüche, wobei das Bereitstellen Bereitstellen der Spritzgießmaschine aufweist, wobei wenigstens eines von dem ersten Formteil und dem zweiten Formteil aus einem Material hergestellt ist, das aus der Gruppe ausgewählt ist, die beinhaltet: Aluminium, Beryllium, Kupfer und beliebige Legierungen davon.

**Revendications**

**1.** Procédé de fonctionnement d'une machine de moulage par injection à haute productivité, le procédé comprenant :

le fait de prévoir une machine de moulage par injection qui possède un moule qui comprend un premier côté de moule et un second côté de moule, au moins l'un du premier côté de moule et du second côté de moule ayant une conductivité thermique moyenne supérieure à 51,9 W/m °C (30 BTU/HR FT °F), et une cavité de moule qui est formée entre le premier côté de moule et le second côté de moule ;
le fonctionnement de la machine de moulage par injection pendant au moins un cycle de moulage par injection, le cycle de moulage par injection comprenant
l'avancement d'un matériau thermoplastique moulé dans la cavité de moule ;
le remplissage substantiel de la cavité de moule avec le matériau thermoplastique ;
le refroidissement du matériau thermoplastique ;
la séparation du premier côté de moule et du second côté de moule afin d'exposer le matériau thermoplastique refroidi ;
le retrait du matériau thermoplastique refroidi ; et
la fermeture du premier côté de moule et du second côté de moule ;
**caractérisé en ce que** le matériau plastique moulé est injecté dans la cavité de moule à une pression sensiblement constante pendant une durée de remplissage pendant laquelle le matériau plastique moulé s'écoule dans la cavité de moule, la durée de remplissage (240) représentant environ 90% de la durée de remplissage totale et la durée de refroidissement (242) représentant environ 10% de la durée de remplissage totale.

**2.** Procédé selon la revendication précédente, dans lequel le fait de prévoir une machine de moulage par injection comprend le fait de prévoir la machine de moulage par injection dans laquelle chacun du premier et du second côtés de moule possède une conductivité thermique moyenne de 51,9 W/m °C (30 BTU/HR FT °F).

3. Procédé selon l'une quelconque des revendications précédentes, dans lequel :

le fait de prévoir une machine de moulage par injection comprend le fait de prévoir la machine de moulage par injection avec trois grilles ou moins qui sont en liaison de fluide avec la cavité de moule ; et
l'avancement comprend l'avancement du matériau thermoplastique par les trois grilles ou moins.

4. Procédé selon la revendication 3, dans lequel le fait de prévoir une machine de moulage par injection comprend le fait de prévoir la machine de moulage par injection avec les trois grilles ou moins, au moins l'une des trois grilles ou moins ayant un diamètre transversal qui est inférieur à 80% d'une épaisseur de paroi nominale d'une partie qui est formée par le matériau thermoplastique refroidi dans la cavité de moule.

5. Procédé selon la revendication 4, dans lequel le fait de prévoir une machine de moulage par injection comprend le fait de prévoir la machine de moulage par injection avec les trois grilles ou moins, la grille au moins qui présente le diamètre transversal inférieur à 80% de l'épaisseur de paroi nominale ayant un diamètre de grille effectif compris entre 0,5 mm et 10 mm.

6. Procédé selon l'une quelconque des revendications précédentes, dans lequel le fait de prévoir une machine de moulage par injection comprend le fait de prévoir la machine de moulage par injection avec la cavité de moule à parois fines, qui présente un rapport L/T supérieur à 100.

7. Procédé selon l'une quelconque des revendications précédentes, dans lequel le fait de prévoir une machine de moulage par injection comprend le fait de prévoir la machine de moulage par injection avec la cavité de moule à parois fines, qui présente un rapport L/T supérieur à 100 mais inférieur à 1000.

8. Procédé selon l'une quelconque des revendications précédentes, dans lequel le fait de prévoir une machine de moulage par injection comprend le fait de prévoir la machine de moulage par injection avec au moins quatre cavités de moule.

9. Procédé selon l'une quelconque des revendications précédentes, dans lequel :

le fait de prévoir une machine de moulage par injection comprend le fait de prévoir la machine de moulage par injection dans laquelle la cavité de moule est l'une d'une pluralité de cavités de moule qui sont formées entre la première et la seconde parties de moule, la pluralité comprenant entre 16 et 256 cavités de moule ; et
l'avancement comprend l'avancement du matériau thermoplastique dans la pluralité de cavités de moule.

10. Procédé selon l'une quelconque des revendications précédentes, dans lequel le fonctionnement comprend le fonctionnement de la machine de moulage par injection à l'aide de plusieurs cycles de moulage par injection, chacun des cycles d'injection comprenant le remplissage substantiel, le refroidissement, la séparation, le retrait et la fermeture, et chacun des cycles d'injection ayant une durée de cycle comprise entre 2 secondes et 15 secondes.

11. Procédé selon l'une quelconque des revendications précédentes, dans lequel le fonctionnement comprend le fonctionnement de la machine de moulage par injection, chacun des cycles d'injection ayant une durée de cycle comprise entre 8 secondes et 10 secondes.

12. Procédé selon l'une quelconque des revendications précédentes, dans lequel le fait de prévoir une machine de moulage par injection comprend le fait de prévoir la machine de moulage par injection dans laquelle au moins l'une de la première partie de moule et de la seconde partie de moule est composée d'un matériau qui présente une dureté moyenne inférieure à 20 Rc.

13. Procédé selon l'une quelconque des revendications précédentes, dans lequel le fait de prévoir une machine de moulage par injection comprend le fait de prévoir la machine de moulage par injection dans laquelle au moins l'une de la première partie de moule et de la seconde partie de moule est composée d'un matériau choisi parmi le groupe consistant en : de l'aluminium, du béryllium, du cuivre, et n'importe quel alliage de ceux-ci.

Fig. 1

Fig. 2

Fig. 3

Fig. 4

Fig. 5A

Fig. 5B

Fig. 5C

Fig. 5D

Fig. 6A

Fig. 6B

Fig. 6C

Fig. 6D

1000

1110 — Advancing molten thermoplastic material into the mold cavity

1112 — Substatially filling the mold cavity with thermoplastic material

1114 — Cooling the thermoplastic material

1001

1116 — Separating the first mold side and the second mold side to expose the cooled thermoplastic material

1118 — Removing the cooled thermoplastic material

1120 — Closing the first and second mold sides

Fig. 7

Fig. 8

EP 2 852 484 B1

Fig. 9

Fig. 10

EP 2 852 484 B1

Fig. 11

380

Fig. 12

380

Fig. 13

Fig. 14

Fig. 15

Fig. 16

| | |
|---|---|
| ■ | 1601 |
| △ | 1602 |
| ◆ | 1603 |
| □ | 1604 |
| ▲ | 1605 |
| × | 1606 |
| ✳ | 1607 |
| ● | 1608 |
| ○ | 1609 |
| - - - - | 1610 |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5853630 A